(19) **Europäisches Patentamt / European Patent Office / Office européen des brevets**

(11) **EP 4 408 005 A1**

(12) # EUROPEAN PATENT APPLICATION
published in accordance with Art. 153(4) EPC

(43) Date of publication:
**31.07.2024 Bulletin 2024/31**

(21) Application number: **22887543.1**

(22) Date of filing: **25.10.2022**

(51) International Patent Classification (IPC):
**H04N 23/60** (2023.01)　　**H04N 23/00** (2023.01)

(52) Cooperative Patent Classification (CPC):
**H04N 23/00; H04N 23/60**

(86) International application number:
**PCT/KR2022/016318**

(87) International publication number:
**WO 2023/075347 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2021 KR 20210143033
08.12.2021 KR 20210174720**

(71) Applicant: **Samsung Electronics Co., Ltd.
Suwon-si, Gyeonggi-do 16677 (KR)**

(72) Inventors:
• **KWAK, Hokeun**
**Suwon-si Gyeonggi-do 16677 (KR)**
• **CHOI, Dongok**
**Suwon-si Gyeonggi-do 16677 (KR)**
• **HEU, Min**
**Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **CAMERA MODULE AND ELECTRONIC APPARATUS INCLUDING SAME**

(57) A camera module according to an embodiment comprises: a camera housing; a lens assembly located inside the camera housing and including a plurality of lenses; an image sensor located in the camera housing such that the upper surface thereof is parallel to the optical axis of the plurality of lenses; and a reflective member optically located between the lens assembly and the image sensor. The plurality of lenses include a first lens, a second lens, a third lens, and a fourth lens, which are arranged sequentially from a subject. The ratio of the optical distance between the first lens and the reflective member to the optical distance between the first lens and the image sensor may be less than 1, and the ratio of the optical distance between the reflective member and the image sensor to the optical distance between the first lens and the reflective member may be greater than or equal to 1.

FIG.5

**EP 4 408 005 A1**

**Description**

## TECHNICAL FIELD

Various embodiments disclosed herein relate to a camera module and an electronic device including the same.

## BACKGROUND ART

Mobile electronic devices, such as smartphones, may include a camera module. The camera module may include a plurality of lenses, a lens barrel surrounding the plurality of lenses, and an image sensor. The camera module may receive light reflected from an external object. Light reflected from the object may travel inside the lens barrel, pass through the lenses, and travel to the image sensor. The image sensor may convert a received optical signal into a related electrical signal.

The camera module may use a lens assembly in which a plurality of lenses are combined in order to obtain high quality images and/or videos. The camera module may combine a plurality of lenses considering optical performance and/or module size.

## DISCLOSURE OF THE INVENTION

## TECHNICAL PROBLEM

Camera modules provided in electronic devices are required to be miniaturized and have high performance specifications in order to be mounted inside the electronic devices. For example, for a telephoto lens optical system, since the design difficulty was high, it was difficult to implement a refractive type optical system using a reflective member.

According to various embodiments disclosed herein, there are provided a camera module capable of securing optical performance and, at the same time, being miniaturized by optically disposing a position of a reflective member between a plurality of lenses and an image sensor, and an electronic device including the same.

Technical problems to be solved in the embodiments disclosed herein are not limited to the technical problems to be solved, which have been mentioned above, and other technical problems to be solved that are not mentioned will be clearly understood by those of ordinary skill in the art to which the disclosure belongs from the following description.

## TECHNICAL SOLUTION

An aspect of the present invention provides a camera module including a camera housing, a lens assembly at least partially disposed inside the camera housing and including a plurality of lenses, an image sensor disposed on one side of the camera housing so that an image plane is parallel to an optical axis of the plurality of lenses, and a reflective member aligned with the lens assembly in a direction of the optical axis and optically disposed between the lens assembly and the image sensor, and the plurality of lenses include a first lens, a second lens, a third lens, and a fourth lens that are sequentially arranged toward the reflective member from an object, the first lens has a positive refractive power and has a lens surface facing the object formed in a convex shape, the fourth lens has a lens surface facing the reflective member formed in a concave shape, a ratio of an optical distance between the first lens and the reflective member to an optical distance between the first lens and the image sensor is less than 1, a ratio of an optical distance between the reflective member and the image sensor to the optical distance between the first lens and the reflective member is 1 or more, and the optical distance is defined as a length of an optical path that is a path along which light incident on the plurality of lenses along the optical axis passes through the reflective member and travels to the image sensor.

Another aspect of the present invention provides an electronic device including a housing, a display disposed inside the housing to be visually exposed through a front surface of the housing, and a camera module disposed inside the housing and configured to receive external light through a portion of a region of the housing, the camera module includes a camera housing, a lens assembly at least partially disposed inside the camera housing and including a plurality of lenses, an image sensor disposed on one side of the camera housing so that an image plane is parallel to an optical axis of the plurality of lenses, and a reflective member aligned with the lens assembly in a direction of the optical axis and optically disposed between the lens assembly and the image sensor, the plurality of lenses include a first lens, a second lens, a third lens, and a fourth lens that are sequentially arranged toward the reflective member from an object, the reflective member includes an incidence surface facing the fourth lens and an exit surface perpendicular to the incidence surface and facing the image sensor, the first lens has a positive refractive power and has a lens surface on an object side facing the object formed in a convex shape, the fourth lens has a lens surface on a reflective member side facing the reflective member formed in a concave shape, a ratio of an optical distance between the first lens and the reflective member to an optical distance between the first lens and the image sensor is less than 1, a ratio of an optical distance between the reflective member and the image sensor to the optical distance between the first lens and the reflective member is 1 or more, and the optical distance is defined as a length of an optical path that is a path along which external light incident on the plurality of lenses along the optical axis passes through the reflective member and travels to the image sensor.

## ADVANTAGEOUS EFFECTS

A camera module according to various embodiments disclosed herein can secure optical performance and, at the same time, can be miniaturized, by optically disposing a position of a reflective member between a plurality of lenses and an image sensor.

In addition, the camera module according to various embodiments disclosed herein can secure excellent performance and reduce the size by being configured so that a distance between a first lens closest to an object and the image sensor and a distance between the first lens and a reflective member have a specified ratio.

In addition, the camera module according to various embodiments disclosed herein can secure excellent performance and reduce the size by being configured so that the distance between the first lens and the reflective member and a distance between the reflective member and the image sensor have a specified ratio.

Besides, various effects may be provided that are directly or indirectly identified through the disclosure.

## BRIEF DESCRIPTION OF THE DRAWINGS

FIG. 1 is a block diagram illustrating an electronic device in a network environment according to various embodiments.

FIG. 2 is a block diagram illustrating the camera module according to various embodiments.

FIG. 3a is a front perspective view of an electronic device according to one embodiment.

FIG. 3b is a rear perspective view of the electronic device according to one embodiment.

FIG. 3c is an exploded perspective view of the electronic device according to one embodiment.

FIG. 4a is a perspective view of a camera module according to one embodiment.

FIG. 4b is a view showing a lens assembly, a reflective member, and an image sensor of the camera module according to one embodiment.

FIG. 5 is a view showing a lens optical system of a camera module according to one embodiment.

FIG. 6 is a view showing a configuration of a lens optical system according to a first embodiment.

FIG. 7 is a view showing spherical aberration, astigmatism, and distortion aberration of the lens optical system according to the first embodiment in FIG. 6.

FIG. 8 is a view showing a configuration of a lens optical system according to a second embodiment.

FIG. 9 is a view showing spherical aberration, astigmatism, and distortion aberration of the lens optical system according to the second embodiment in FIG. 8.

FIG. 10 is a view showing a configuration of a lens optical system according to a third embodiment.

FIG. 11 is a view showing spherical aberration, astigmatism, and distortion aberration of the lens optical system according to the third embodiment in FIG. 10.

FIG. 12 is a view showing a configuration of a lens optical system according to a fourth embodiment.

FIG. 13 is a view showing spherical aberration, astigmatism, and distortion aberration of the lens optical system according to the fourth embodiment in FIG. 12.

FIG. 14 is a view showing a configuration of a lens optical system according to a fifth embodiment.

FIG. 15 is a view showing spherical aberration, astigmatism, and distortion aberration of the lens optical system according to the fifth embodiment in FIG. 14.

With respect to the description of the drawings, the same or similar reference signs may be used for the same or similar elements.

## MODE FOR CARRYING OUT THE INVENTION

Hereinafter, various embodiments disclosed in the disclosure will be described with reference to the accompanying drawings. However, this is not intended to limit the disclosure to the specific embodiments, and it is to be construed to include various modifications, equivalents, and/or alternatives of embodiments of the disclosure.

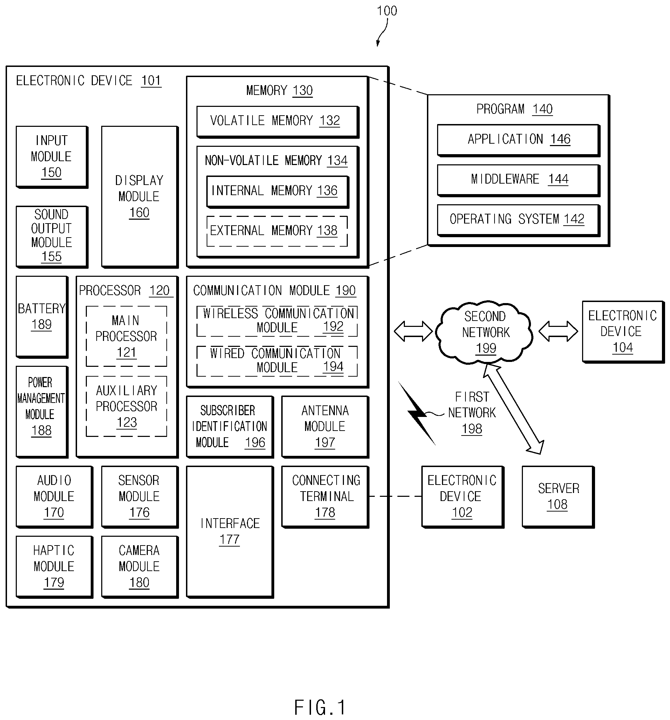

FIG. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

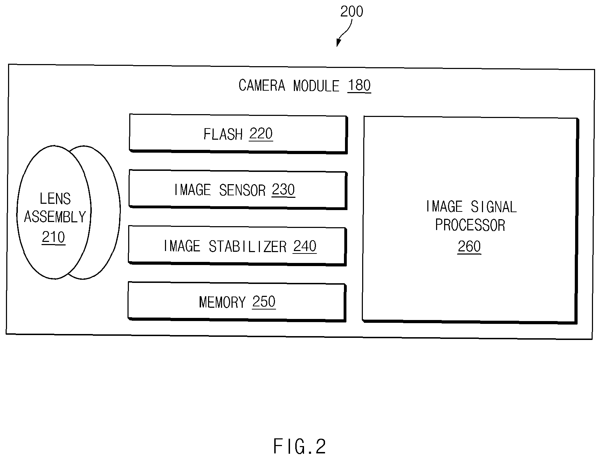

FIG. 2 is a block diagram 200 illustrating the camera module 180 according to various embodiments.

Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

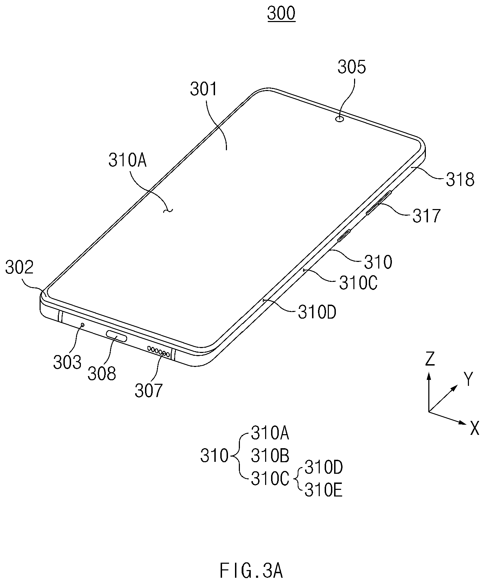

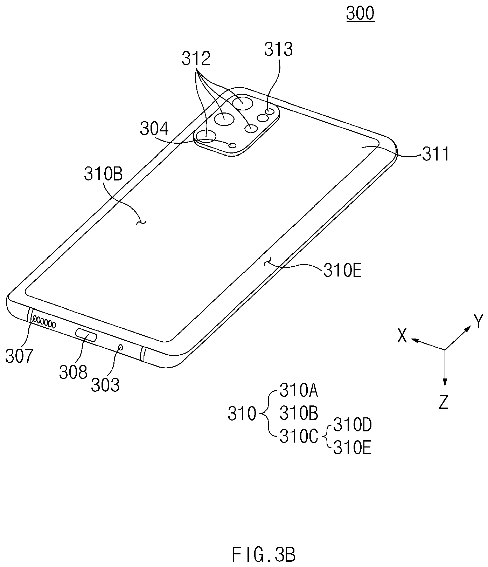

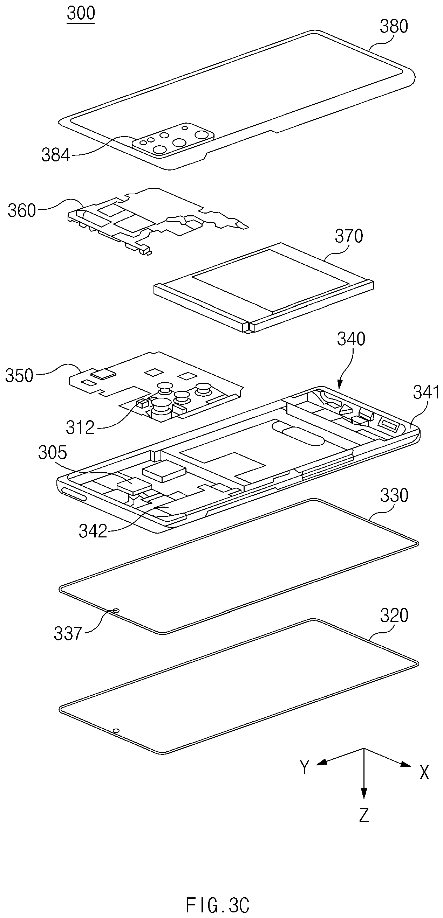

FIG. 3a is a front perspective view of an electronic device according to one embodiment. FIG. 3b is a rear perspective view of the electronic device according to one embodiment. FIG. 3c is an exploded perspective view of the electronic device according to one embodiment.

Referring to FIGS. 3a and 3b, an electronic device 300 (e.g., the electronic device 101 in FIG. 1) according to one embodiment may include a housing 310 including a first surface (or front surface) 310A, a second surface (or back surface) 310B, and a third surface (or side surface) 310C surrounding a space between the first surface 310A and the second surface 310B.

In another embodiment, the housing 310 may refer to a structure forming part of the first surface 310A, the second surface 310B, and the third surface 310C.

According to one embodiment, the first surface 310A may be formed by a front plate 302 (e.g., a glass plate or a polymer plate including various coating layers) that is at least partially substantially transparent. The second surface 310B may be formed by a back plate 311 that is substantially opaque. The back plate 311 may be formed, for example, by coated or colored glass, ceramic, polymer, metal (e.g., aluminum, stainless steel (STS), or magnesium), or a combination of at least two of the above materials. The third surface 310C may be coupled with the front plate 302 and the back plate 311, and may be formed by a side bezel structure (or a "side member") 318 that includes metal and/or polymer.

In another embodiment, the back plate 311 and the side bezel structure 318 may be integrally formed, and may include the same material (e.g., a metal material such as aluminum).

In the illustrated embodiment, the front plate 302 may include two first regions 310D that are bent from a portion of a region of the first surface 310A toward the back plate 311 and extend seamlessly. The first regions 310D may be positioned at both ends of a long edge of the front plate 302.

In the illustrated embodiment, the back plate 311 may include two second regions 310E that are bent from a portion of a region of the second surface 310B toward the front plate 302 and extend seamlessly. The second regions 310E may be included at both ends of a long edge of the back plate 311.

In another embodiment, the front plate 302 (or the back plate 311) may include only one of the first regions 310D (or the second regions 310E). In addition, in another embodiment, the front plate 302 (or the back plate 311) may not include some of the first regions 310D (or the second regions 310E).

In one embodiment, when viewed from the side of the electronic device 300, the side bezel structure 318 may have a first thickness (or width) in a lateral direction (e.g., a short side) in which the first regions 310D or the second regions 310E as described above are not included, and may have a second thickness thinner than the first thickness in a lateral direction (e.g., a long side) in which the first regions 310D or the second regions 310E are included.

In one embodiment, the electronic device 300 may include at least one of a display 301 (e.g., the display module 160 in FIG. 1), audio modules 303, 304, and 307 (e.g., the audio module 170 in FIG. 1), a sensor module (not illustrated) (e.g., the sensor module 176 in FIG. 1), camera modules 305, 312, and 313 (e.g., the camera module 180 in FIG. 1), key input devices 317 (e.g., the input device 150 in FIG. 1), a light emitting element (not illustrated), and a connector hole 308 (e.g., the connection terminal 178 in FIG. 1). In another embodiment, the electronic device 300 may omit at least one of the components (e.g., the key input devices 317 or the light emitting element (not illustrated)) or may additionally include other components.

In one embodiment, the display 301 may be visually exposed through a significant portion of the front plate 302. For example, at least a portion of the display 301 may be visually exposed through the front plate 302 including the first surface 310A and the first regions 310D of the third surface 310C. The display 301 may be disposed on a back surface of the front plate 302.

In one embodiment, an edge of the display 301 may be formed to be substantially the same as an outer edge of the front plate 302 adjacent to the edge. In another embodiment, in order to expand the area where the display 301 is visually exposed, an interval between the outer edge of the display 301 and the outer edge of the front plate 302 may be formed to be substantially the same as each other.

In one embodiment, the surface of the housing 310 (or the front plate 302) may include a screen display region formed by visually exposing the display 301. For example, the screen display region may include the first surface 310A and the first regions 310D of the side surface.

In another embodiment, the screen display regions 310A and 310D may include a sensing region (not illustrated) configured to obtain biometric information about a user. Here, it is to be understood that "the screen display regions 310A and 310D include the sensing region" means that at least a portion of the sensing region may overlap the screen display regions 310A and 310D. For example, the sensing region (not illustrated) may mean a region in which visual information may be displayed by the display 301 like other regions of the screen display regions 310A and 310D, and additionally, biometric information (e.g., fingerprint) about the user may be obtained.

In one embodiment, the screen display regions 310A and 310D of the display 301 may include a region through which a first camera module 305 (e.g., a punch hole camera) may be visually exposed. For example, in a region where the first camera module 305 is visually exposed, at least a portion of its edge may be surrounded by the screen display regions 310A and 310D. In various embodiments, the first camera module 305 may include a plurality of camera modules (e.g., the camera module 180 in FIG. 1).

In various embodiments, the display 301 may be configured so that at least one of an audio module (not illustrated), a sensor module (not illustrated), a camera module (e.g., the first camera module 305), and a light emitting element (not illustrated) is disposed on a back surface of the screen display regions 310A and 310D. For example, the electronic device 300 may be configured to be disposed so that the first camera module 305 (e.g., an under display camera) faces the first surface 310A (e.g., the front surface) and/or the side surface 310C (e.g., at least one surface of the first region 310D) on a back surface (e.g., a surface facing a -z-axis direction) of the first surface 310A and/or the side surface 310C. For example, the first camera module 305 may be disposed below the display 301 and may not be visually exposed to the screen display regions 310A and 310D.

In various embodiments, when the first camera module 305 is configured as the under-display camera, in the display 301, a region facing the first camera module 305, which is a portion of the display region displaying content, may be formed as a transmission region with a specified transmittance. For example, the transmission region may be formed to have a transmittance ranging from about 5% to about 50%. The transmission region may include a region overlapping an effective region (e.g., a field of view (FOV) region) of the first camera module 305, through which light formed by the image sensor (e.g., the image sensor 230 in FIG. 2) for generating an image passes. For example, the transmission region of the display 301 may include a region having a lower pixel density and/or wiring density than a surrounding region.

In another embodiment (not illustrated), the display 301 may be coupled with or disposed adjacent to a touch sensing circuit, a pressure sensor capable of measuring the intensity (pressure) of the touch, and/or a digitizer detecting a magnetic field type stylus pen.

In one embodiment, the audio modules 303, 304, and 307 may include microphone holes 303 and 304 and speaker holes 307.

In one embodiment, the microphone holes 303 and 304 may include a first microphone hole 303 formed in a portion of a region of the third surface 310C and a second microphone hole 304 formed in a portion of a region of the second surface 310B. Inside the microphone holes 303 and 304, microphones (not illustrated) for acquiring external sound may be disposed. A plurality of microphones may be included to detect a direction of sound.

In one embodiment, the second microphone hole 304 formed in a portion of a region of the second surface 310B may be disposed adjacent to the camera modules 305, 312, and 313. For example, the second microphone hole 304 may acquire sound when the camera modules 305, 312, and 313 are executed, or acquire sound when other functions are executed.

In one embodiment, the speaker holes 307 may include external speaker holes 307 and a receiver hole (not illustrated) for calls. The external speaker holes 307 may be formed in a portion of the third surface 310C of the electronic device 300. In another embodiment, the external speaker holes 307 and the microphone hole 303 may be implemented as one hole. Although not illustrated, the receiver hole (not illustrated) for calls may be formed in a different portion of the third surface 310C. For example, the receiver hole for calls may be formed in a different portion of the third surface 310C (e.g., a portion facing a +y-axis direction) opposite the portion of the third surface 310C in which the external speaker holes 307 are formed (e.g., a portion facing a -y-axis direction). According to various embodiments, the receiver hole for calls may not be formed in a portion of the third surface 310C, but formed by a separation space between the front plate 302 (or display 301) and the side bezel structure 318.

In one embodiment, the electronic device 300 may include at least one speaker (not illustrated) configured to output sound to the outside of the housing 310 through the external speaker hole 307 or the receiver hole (not illustrated) for calls. According to various embodiments, the speaker may include a piezo speaker in which the speaker hole 307 is omitted.

In one embodiment, the sensor module (not illustrated) may generate an electrical signal or data value corresponding to an internal operational state or an external environmental state of the electronic device 300. The sensor module may include, for example, at least one of a proximity sensor, a heart rate monitoring (HRM) sensor, a fingerprint sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

In one embodiment, the camera modules 305, 312, and 313 may include the first camera module 305 (e.g., a punch hole camera) exposed to the first surface 310A of the electronic device 300, and the second camera module 312 and/or a flash 313 exposed to the second surface 310B.

In one embodiment, the first camera module 305 may be visually exposed through a portion of the screen display regions 310A and 110D of the display 301. For example, the first camera module 305 may be visually exposed through a portion of a region of the screen display regions 310A and 310D through an opening (not illustrated) formed in a portion of the display 301. For another example, the first camera module 305 (e.g., the under-display camera) may be disposed on the back surface of the display 301 and may not be visually exposed to the screen display regions 310A and 310D.

In one embodiment, the second camera module 312 may include a plurality of cameras (e.g., a dual camera, a triple camera, or a quad camera). However, the second camera module 312 is not necessarily limited to including a plurality of cameras, and may include a single camera.

In one embodiment, the first camera module 305 and the second camera module 312 may include one or more lenses, an image sensor, and/or an image signal processor. The flash 313 may include, for example, a light emitting diode or a xenon lamp. In another embodiment, two or more lenses (infrared camera, wide-angle and telephoto lenses) and image sensors may be disposed on one surface of the electronic device 300.

In one embodiment, the key input device 317 may be disposed on the third surface 310C of the housing 310 (e.g., the first regions 310D and/or the second regions 310E). In another embodiment, the electronic device 300 may not include some or all of the key input devices 317, and the key input device(s) 317 that is (are) not included may be implemented in other forms, such as a soft key, on the display 301. In another embodiment, the key input device may include a sensor module (not illustrated) forming the sensing region (not illustrated) included in the screen display regions 310A and 310D.

In one embodiment, the connector hole 308 may accommodate a connector. The connector hole 308 may be disposed in the third surface 310C of the housing 310. For example, the connector hole 308 may be disposed in the third surface 310C to be adjacent to at least a portion of the audio module (e.g., the microphone hole 303 and the speaker hole 307). In another embodiment, the electronic device 300 may include a first connector hole 308 capable of accommodating a connector (e.g., a USB connector) for transmitting and receiving electric power and/or data to and from an external electronic device, and/or a second connector hole (not illustrated) capable of accommodating a connector (e.g., an earphone jack) for transmitting and receiving audio signals to and from an external electronic device.

In one embodiment, the electronic device 300 may include the light emitting element (not illustrated). For example, the light emitting element (not illustrated) may be disposed on the first surface 310A of the housing 310. The light emitting element (not illustrated) may provide state information about the electronic device 300 in the form of light. In another embodiment, the light emitting element (not illustrated) may provide a light source in conjunction with the operation of the first camera module 305. For example, the light emitting element (not illustrated) may include an LED, an IR LED, and/or a xenon lamp.

Referring to FIG. 3c, the electronic device 300 according to one embodiment may include a front plate 320 (e.g., the front plate 302 in FIG. 3a) a display 330 (e.g., the display 301 in FIG. 3a), a side member 340 (e.g., the side bezel structure 318 in FIG. 3a), a printed circuit board 350, a rear case 360, a battery 370, a back plate 380 (e.g., the back plate 311 in FIG. 3b), and an antenna (not illustrated).

In various embodiments, the electronic device 300 may omit at least one (e.g., the rear case 360) of the components or may also include other additional components. Some of the components of the electronic device 300 shown in FIG. 3c may be the same as or similar to some of the components of the electronic device 300 shown in FIGS. 3a and 3b, and repeated descriptions thereof will be omitted.

In one embodiment, the front plate 320 and the display 330 may be coupled to the side member 340. For example, with reference to FIG. 3c, the front plate 320 and the display 330 may be disposed below the side member 340. The front plate 320 and the display 330 may be positioned in a +z-axis direction from the side member 340. For example, the display 330 may be coupled below the side member 340, and the front plate 320 may be coupled below the display 330. The front plate 320 may form a part of an outer surface (or exterior) of the electronic device 300. The display 330 may be disposed between the front plate 320 and the side member 340 to be positioned inside the electronic device 300.

In one embodiment, the side member 340 may be disposed between the display 330 and the back plate 380. For example, the side member 340 may be configured to surround a space between the back plate 380 and the display 330.

In one embodiment, the side member 340 may include a frame structure 341 forming a portion of a side surface (e.g., the third surface 310C in FIG. 3a) of the electronic device 300 and a plate structure 342 extending inwardly from the frame structure 341.

In one embodiment, the plate structure 342 may be disposed inside the frame structure 341 so that the plate structure 342 is surrounded by the frame structure 341. The plate structure 342 may be connected to the frame structure 341 or may be formed integrally with the frame structure 341. The plate structure 342 may be formed of a metallic material and/or a non-metallic (e.g., polymer) material. In one embodiment, the plate structure 342 may support other components included in electronic device 300. For example, at least one of the display 330, the printed circuit board 350, the rear case 360, and the battery 370 may be disposed on the plate structure 342. For example, the display 330 may be coupled to one surface (e.g., the surface facing the +z-axis direction) of the plate structure 342, and the printed circuit board 350 may be coupled to a surface facing opposite to the one surface (e.g., the surface facing the -z-axis direction).

In one embodiment, the rear case 360 may be disposed between the back plate 380 and the plate structure 342. The rear case 360 may be coupled to the side member 340 to overlap at least a portion of the printed circuit board 350. For example, the rear case 360 may face the plate structure 342 with the printed circuit board 350 interposed therebetween.

In one embodiment, on the printed circuit board 350, a processor (e.g., the processor 120 in FIG. 1), a memory (e.g., the memory 130 in FIG. 1), and/or an interface (e.g., the interface 177 in FIG. 1) may be installed. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, a secure digital (SD) card interface, and/or an audio interface. The interface may electrically or physically connect the electronic device 300 to an external electronic device, and may include a USB connector, an SD card, an MMC connector, or an audio connector.

In one embodiment, the battery 370 (e.g., the battery 189 in FIG. 1) may supply power to at least one component of electronic device 300. Examples of the battery 370 may include a non-rechargeable primary battery, a rechargeable secondary battery, or a fuel cell. At least a portion of the battery 370 may be disposed on substantially the same plane as the printed circuit board 350. The battery 370 may be integrally disposed inside the electronic device 300, or may be disposed to be detachable from the electronic device 300.

In one embodiment, the antenna (not illustrated) (e.g., the antenna module 197 in FIG. 1) may be disposed between the back plate 380 and the battery 370. Examples of the antenna (not illustrated) may include a near field communication (NFC) antenna, a wireless charging antenna, and/or a magnetic secure transmission (MST) antenna. The antenna (not illustrated) may, for example, perform short range communication with an external device, or may wirelessly transmit and receive electric power required for charging.

In one embodiment, the first camera module 305 may be disposed in at least a portion (e.g., the plate structure 342) of the side member 340 so that a lens may receive external light through a portion of the region of the front plate 320 (e.g., the front surface 310A in FIG. 3a). For example, the lens of the first camera module 305 may be visually exposed to a portion of the region of the front plate 320. A camera region 337 (e.g., an opening area or a light transmitting region) corresponding to the first camera module 305 may be formed in the display 330.

In one embodiment, the second camera module 312 may be disposed on the printed circuit board 350 so that a lens may receive external light through a camera region 384 of the back plate 380 (e.g., the back surface 310B in FIG. 3B) of the electronic device 300. For example, the lens of the second camera module 312 may be visually exposed to the camera region 384. In one embodiment, the second camera module 312 may be disposed in at least a portion of an internal space formed in the housing (e.g., the housing 310 in FIGS. 3a and 3b) of the electronic device 300, and may be electrically connected to the printed circuit board 350 through a connection member (e.g., the connector).

In one embodiment, the camera region 384 may be formed on the surface of the back plate 380 (e.g., the back surface 310B in FIG. 3b). In one embodiment, the camera region 384 may be formed to be at least partially transparent to allow external light to be incident on the lens of the second camera module 312. In one embodiment, at least a portion of the camera region 384 may protrude from the surface of the back plate 380 at a predetermined height. However, the camera region 384 is not necessarily limited thereto, and may be formed to be substantially the same plane as the surface of the back plate 380.

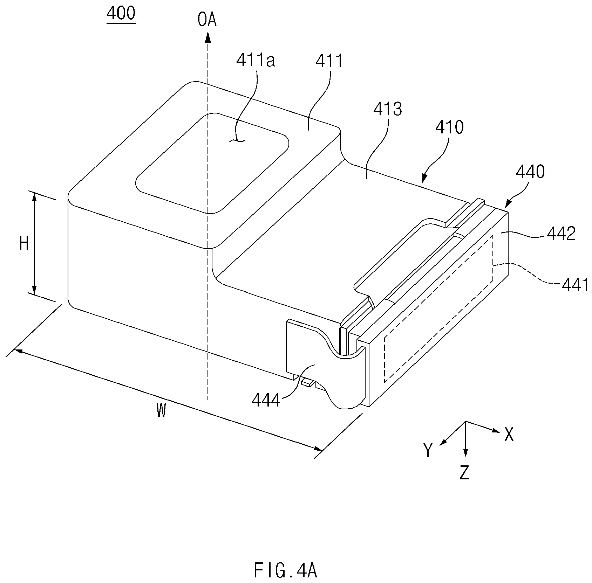

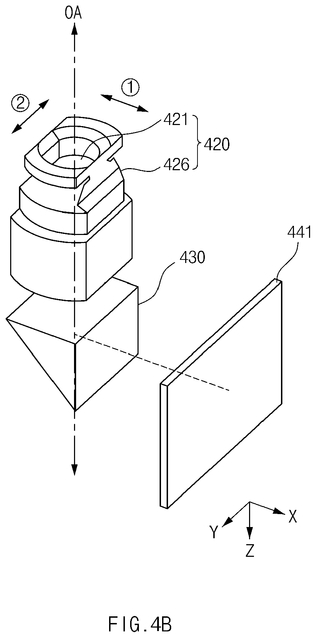

FIG. 4a is a perspective view of a camera module according to one embodiment. FIG. 4b is a view showing a lens assembly, a reflective member, and an image sensor of the camera module according to one embodiment.

FIG. 4b may be a view in which a camera housing 410, a sensor substrate 442, and a connection member 444 are omitted from a camera module 400 in FIG. 4a.

Referring to FIGS. 4a and 4b, the camera module 400 (e.g., the camera modules 305 and 312 in FIGS. 3a, 3b and 3c) according to one embodiment may include the camera housing 410, a lens assembly 420 (e.g., the lens assembly 210 in FIG. 2), a reflective member 430, and a sensor assembly 440 (e.g., the image sensor 230 in FIG. 2).

In one embodiment, the camera housing 410 may have an internal space formed therein to accommodate the lens assembly 420 and the reflective member 430. The camera housing 410 may support the sensor assembly 440. Although not illustrated, the camera housing 410 may include a frame and a cover (e.g., a shield can) that are coupled to each other, and may be configured to form the internal space by the combination of the frame and the cover.

In one embodiment, the camera housing 410 may include a first portion in which the lens assembly 420 and the reflective member 430 are accommodated and a second portion 413 that extends from the first portion 411 in one direction and in which the sensor assembly 440 is disposed. For example, the second portion 413 may extend from the first portion 411 in a direction perpendicular to the optical axis OA (e.g., an x-axis direction). The first portion 411 and the second portion 413 may be formed so that their respective internal spaces are connected. For example, the first portion 411 and the second portion 413 may have a shape to be connected so that light passing through the lens assembly 420 and the reflective member 430 may be incident on the image sensor 441. The second portion 413 may be formed to be stepped from the first portion 411 to have a lower height (e.g., a length in the z-axis direction) than the first portion 411. However, the shape of the camera housing 410 is not limited to the example illustrated.

In one embodiment, the lens assembly 420 and the reflective member 430 may be disposed inside the first portion 411. A light receiving region 411a may be formed on one surface (e.g., a surface facing the -z-axis direction) of the first portion 411. The light receiving region 411a may be aligned with the optical axis OA defined by a lens unit 421 of the lens assembly 420. For example, external light may be incident on the lens unit 421 through the light receiving region 411a. In various embodiments, the light receiving region 411a may be formed as an open region, or may be formed in a form in which transparent glass is disposed in the open region.

In one embodiment, the sensor assembly 440 may be disposed on one side of the second portion 413. For example, the sensor assembly 440 may be disposed at an end of the second portion 413 in an +x-axis direction. In various embodiments, the end of the second portion 413 in the +x-axis direction may be formed in an open form so that the sensor assembly 440 may receive light. For example, an opening (not shown) may be formed at the end of the second portion 413 in the +x-axis direction, and light passing through the lens assembly 420 and the reflective member 430 may be incident on the image sensor 441 through the opening.

In one embodiment, the lens assembly 420 may include the lens unit 421 constituted by a plurality of lenses and a lens barrel 426 surrounding the lens unit 421. At least a portion of the lens unit 421 may be accommodated inside the lens barrel 426. The optical axis OA may be defined by the plurality of lenses constituting the lens unit 421. The optical axis OA may pass through the center of the lens unit 421.

In one embodiment, the reflective member 430 may be configured to change the path of light passing through the lens assembly 420. For example, the reflective member 430 may change the path of light so that the light passing through the lens unit 421 travels toward the image sensor 441. The reflective member 430 may be aligned with the lens assembly 420 about the optical axis OA. The reflective member 430 may be optically disposed between the lens assembly 420 and the image sensor 441. The reflective member 430 may change the path of light incident on the reflective member 430 to a direction substantially perpendicular to the incident direction. The reflective member 430 may be configured to reflect or refract the incident light passing through the lens unit 421. Examples of the reflective member 430 may include a prism or mirror having an inclined surface.

In one embodiment, the sensor assembly 440 may be coupled to one side of the camera housing 410. The sensor assembly 440 may include the sensor substrate 442, the image sensor 441, and the connection member 444.

The sensor assembly 440 may be coupled to one end of the second portion 413 so that the image sensor 441 faces the internal space of the second portion 413. For example, the sensor assembly 440 may be configured so that its portion is accommodated inside the second portion 413 of the camera housing 410 and another portion (e.g., the sensor substrate 442) is exposed to the outside of the camera housing 410.

In one embodiment, the image sensor 441 may be disposed on one side of the sensor substrate 442 (e.g., the surface facing a -x-axis direction based on FIG. 4a). For example, the image sensor 441 may be mounted on one surface of the sensor substrate 442 to be electrically connected to the sensor substrate 442. The image sensor 441 may be configured to receive external light passing through the lens assembly 420 and the reflective member 430 disposed inside the camera housing 410 and generate an electrical signal related to an image based on the received light.

In one embodiment, the connection member 444 may be electrically connected to the sensor substrate 442 of the sensor assembly 440. For example, the connection member 444 may extend from one side of the sensor substrate 442. The connection member 444 may electrically connect the sensor substrate 442 to a printed circuit board (e.g., the printed circuit board 350 in FIG. 3c) of an electronic device (e.g., the electronic device 300 in FIG. 3c). The connection member 444 may include a flexible printed circuit board (FPCB).

In one embodiment, the camera module 400 may be configured to provide auto focus (AF) and optical image stabilization (OIS) functions by controlling the movement of the lens assembly 420. Although not illustrated, the camera module 400 may further include a driving unit configured to move the lens assembly 420. For example, the driving unit may provide a driving force for movement of the lens assembly 420.

In one embodiment, the camera module 400 may perform the AF function through an operation of moving the lens assembly 420 in the direction of the optical axis OA. For example, the lens assembly 420 may move in the direction of the optical axis OA relative to the reflective member 430, and accordingly, the distance between the lens assembly 420 and the reflective member 430 may change in the direction of the optical axis OA.

In one embodiment, the camera module 400 may perform the OIS function through an operation of moving the lens assembly 420 in one or more directions perpendicular to the optical axis OA. For example, the lens assembly 420 may move in directions of a first axis (1) and a second axis ②, which are perpendicular to the optical axis OA relative to the reflective member 430, and accordingly, a relative position change may occur between the lens assembly 420 and the reflective member 430 in the directions of the first axis ① and the second axis ②. The first axis (1) and the second axis ② may be substantially perpendicular to each other.

In one embodiment, the camera module 400 may be referred to as the second camera module (e.g., the rear camera module) shown in FIGS. 3b and 3c. For example, the camera module 400 may be configured so that the lens receives light through a camera region (e.g., the camera region 384 in FIG. 3c) of a back plate (e.g., the back plate 380 in FIG. 3c), and to this end, may be disposed inside the electronic device (e.g., the electronic device 300 in FIG. 3c) so that the light receiving region 411a, on which light is incident, faces the back plate 380 (e.g., faces the -z-axis direction). However, the camera module 400 is not limited thereto, and may be provided to function as a front camera module (e.g., the first camera module 305 in FIGS. 3a and 3c).

In the camera module 400 according to the present invention, the reflective member 430 may be optically positioned between the lens assembly 420 and the image sensor 441 and the optical distance and/or optical conditions of each of the lens unit 421 of the lens assembly 420, the reflective member 430, and the image sensor 441 with respect to the other may be adjusted, thereby reducing a height H and a width W of the camera module 400 to a certain level.

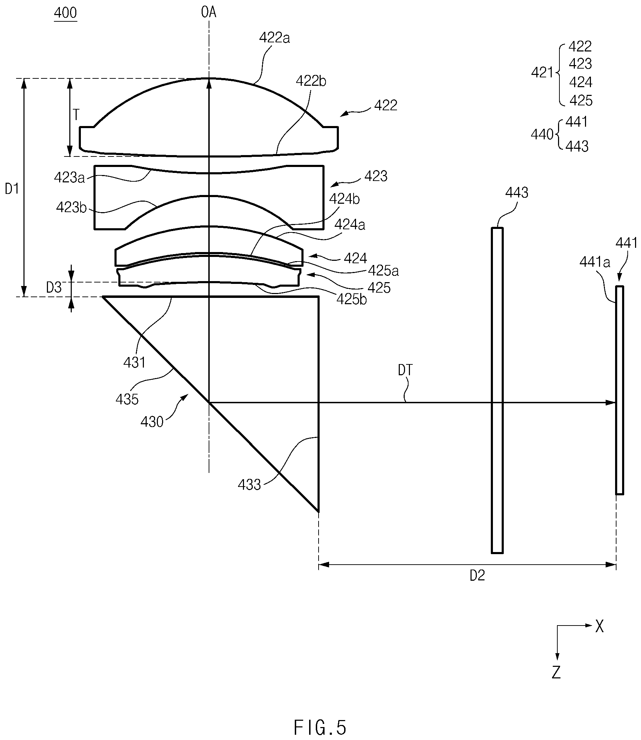

FIG. 5 is a view showing a lens optical system of a camera module according to one embodiment.

FIG. 5 may be a view schematically illustrating a configuration of a lens optical system included in a camera module. For example, FIG. 5 may be a cross-sectional view of the camera module shown in FIG. 4a in an x-z plane direction.

Referring to FIG. 5, the camera module 400 according to one embodiment may include a lens unit 421, a reflective member 430, an image sensor 441, and an optical filter 443. For example, the lens unit 421, the reflective member 430, the image sensor 441, and the optical filter 443 may constitute the lens optical system (e.g., an optical structure) of the camera module 400. The image sensor 441 and the optical filter 443 may be included in a sensor assembly 440 (e.g., the sensor assembly 440 in FIG. 4a).

Some of the components of the camera module 400 shown in FIG. 5 may be the same as or similar to the components of the camera module 400 shown in FIGS. 4a and 4b, and repeated descriptions thereof will be omitted.

In one embodiment, the lens unit 421 may include a plurality of lenses 422, 423, 424, and 425. The lens unit 421 may include a first lens 422, a second lens 423, a third lens 424, and a fourth lens 425 that are sequentially arranged toward the reflective member 430 from an object OBJ. For example, the lens unit 421 may have a form in which the first lens 422 is disposed closest to the object OBJ, the fourth lens 425 is disposed closest to the reflective member 430, and the second lens 423 and the third lens 424 are disposed between the first lens 422 and the fourth lens 425. In various embodiments, the first lens 422, the second lens 423, the third lens 424, and the fourth lens 425 may be formed of plastic material.

In one embodiment, the lenses of the lens unit 421 may be aligned about the optical axis OA. The optical axis OA may refer to a straight line connecting the center points of a plurality of lenses. For example, the optical axis OA may pass through the centers of the lens surfaces of the plurality of lenses. The lenses of the lens unit 421 may form a symmetrical shape about the optical axis OA.

In one embodiment, the lens unit 421 may be disposed so that the optical axis OA overlaps a light receiving region (e.g., the light receiving region 411a in FIG. 4a) of a camera housing (e.g., the camera housing 410 in FIG. 4a). For example, the lens unit 421 may be disposed inside a first portion of the camera housing 410 (e.g., the first portion 411 in FIG. 4a) so that the first lens 422 faces the light receiving region 411a. According to various embodiments, at least a portion of the lens unit 421 may protrude from the light receiving region 411a at a predetermined height.

In one embodiment, the lenses of the lens unit 421 may include lens surfaces facing the object OBJ and lens surfaces facing the reflective member 430. For example, the first lens 422 may include a first lens surface 422a facing the object OBJ and a second lens surface 422b facing the reflective member 430. For example, the second lens 423 may include a third lens surface 423a facing the object OBJ and a fourth lens surface 423b facing the reflective member 430. For example, the third lens 424 may include a fifth lens surface 424a facing the object OBJ and a sixth lens surface 424b facing the reflective member 430. For example, the fourth lens 425 may include a seventh lens surface 425a facing the object OBJ and an eighth lens surface 425b facing the reflective member 430.

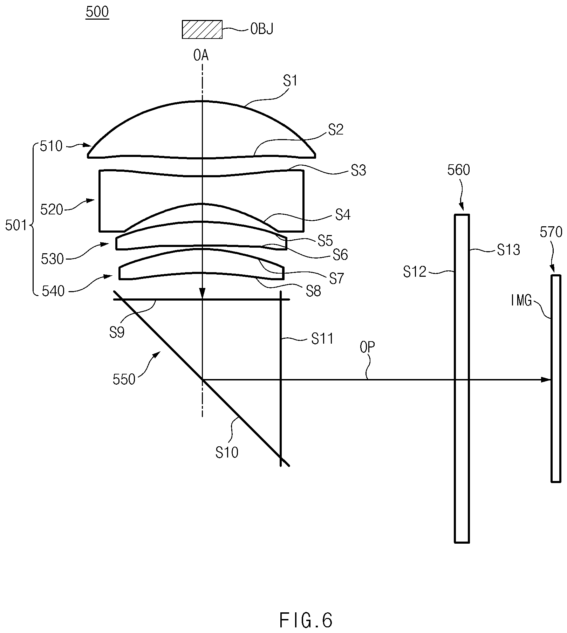

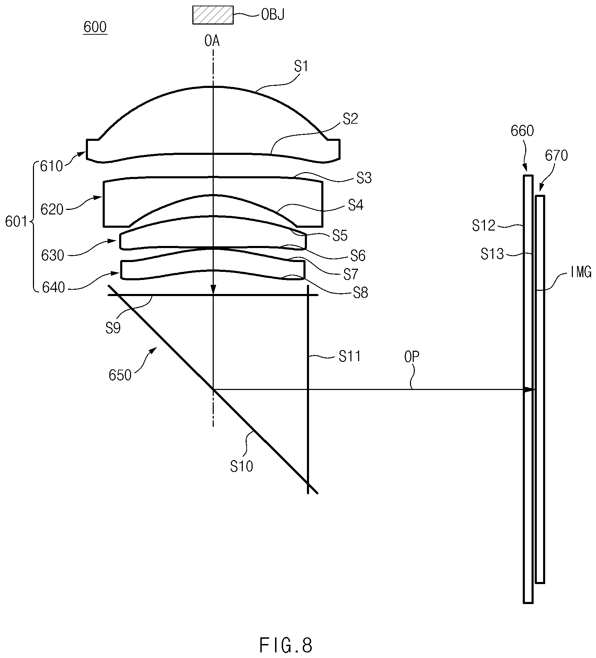

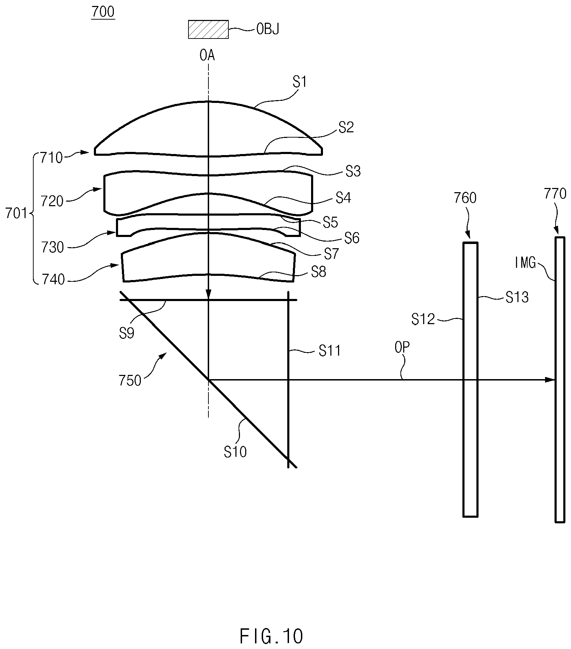

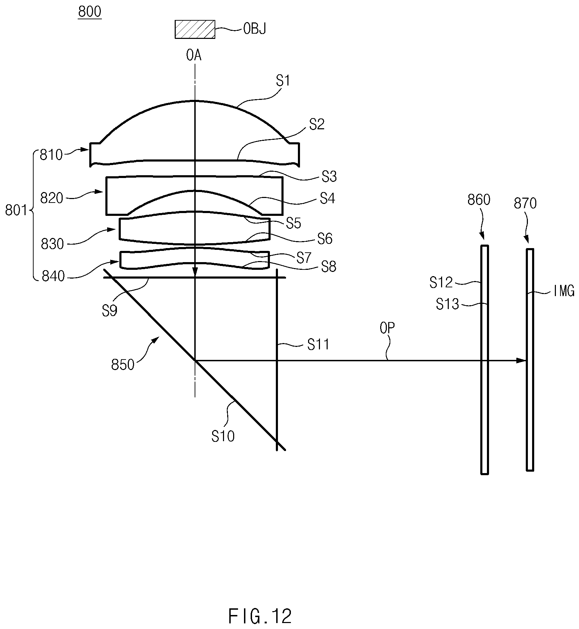

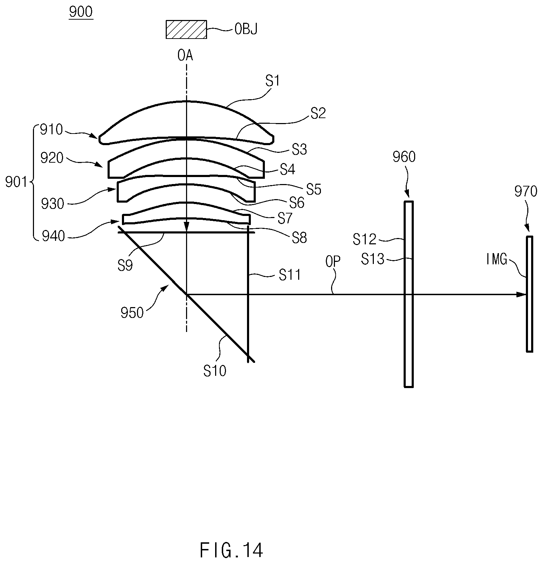

In one embodiment, the lens unit 421 may be configured so that the first lens 422 has positive refractive power and the second lens 423, the third lens 424, and the fourth lens 425 have positive refractive power or negative refractive power. Preferably, at least one of the second lens 423, the third lens 424, and the fourth lens 425 may have negative refractive power. According to the embodiment shown in FIG. 5, the first lens 422, the third lens 424, and the fourth lens 425 may have positive refractive power, and the second lens 423 may have negative refractive power. However, the refractive power of the second lens 423, the third lens 424, and the fourth lens 425 is not limited to thereto, and may be varied in various ways as in other embodiments described below (e.g., the first embodiment in FIG. 6, the second embodiment in FIG. 8, the third embodiment in FIG. 10, the fourth embodiment in FIG. 12, and the fifth embodiment in FIG. 14).

In one embodiment, the lens unit 421 may be configured so that a lens surface 442a of the first lens 422 facing the object OBJ has a convex shape and a lens surface 425b of the fourth lens 425 facing the reflective member 430 has a concave shape. For example, the first lens surface 422a may be formed to be convex, and the eighth lens surface 425b may be formed to be concave. In the description of the shape of the lens surface, the convex shape may mean that a part of the optical axis OA of the lens surface is convex and the concave shape may mean that a part of the optical axis OA of the lens surface is concave.

According to the embodiment shown in FIG. 5, the third lens surface 423a and the fourth lens surface 423b of the second lens 423 may be formed to be concave, and the fifth lens surface 424a of the third lens 424 may be formed to be convex, the sixth lens surface 424b of the third lens 424 may be formed to be concave, and the seventh lens surface 425a of the fourth lens 425 may be formed to be convex; however, the lens surfaces are not limited thereto.

In one embodiment, the lens unit 421 may include at least two aspherical lenses. For example, in the lens unit 421, at least two of the first to fourth lenses 422 to 425 may be formed as aspherical lenses. The aspherical lens may refer to a lens whose lens surface has one or more inflection points. For example, a lens in which at least one of the lens surface facing the object OBJ and the lens surface facing the reflective member 430 is formed as an aspherical surface may be an aspherical lens.

In one embodiment, in the lens unit 421, the first lens 422, the second lens 423, the third lens 424, and the fourth lens 425 may all be formed as aspherical lenses. For example, in the first lens 422, the second lens 423, the third lens 424, and the fourth lens 425, the lens surface on an object side (e.g., the first lens surface 422a, the third lens surface 423a, the fifth lens surface 424a, and the seventh lens surface 425a) and the lens surfaces on a reflective member side (e.g., the second lens surface 422b, the fourth lens surface 423b, the sixth lens surface 424b, and the eighth lens surface 425b may be double-sided aspherical lenses. However, the lenses are not limited thereto.

In one embodiment, some of the lenses of the lens unit 421 may be formed to have a specified Abbe number. For example, the Abbe number of the first lens 422 may be greater than 30, and the Abbe number of the second lens 423 may be 30 or less. However, the lenses are not limited thereto.

In one embodiment, the reflective member 430 may be optically disposed between the lens unit 421 and the image sensor 441. For example, the reflective member 430 may be disposed between the lens unit 421 and the image sensor 441 on a travel path for light incident on the lens unit 421 so that the light reaches an upper surface 441a of the image sensor 441 through the lens unit 421 and the reflective member 430. The reflective member 430 may be aligned on the optical axis OA and may partially overlap the lens unit 421 in the direction of the optical axis OA. "The reflective member 430 is optically disposed between the lens unit 421 and the image sensor 441" means that a traveling path of external light sequentially passes through or arrives at the lens unit 421, the reflective member 430, and the image sensor 441.

In one embodiment, the reflective member 430 may include an incidence surface 431, an exit surface 433 substantially perpendicular to the incidence surface 431, and a reflective surface 435 that obliquely connects the incidence surface 431 and the exit surface 433. The reflective member 430 may be configured to allow light that has passed through the lens unit 421 to enter the incidence surface 431, to be reflected in a direction perpendicular to the incident direction by the reflective surface 435, and then to exit through the exit surface 433. The reflective member 430 may be disposed so that the incidence surface 431 faces the lens unit 421 and the exit surface 433 faces the image sensor 441 (or the optical filter 443). For example, the incidence surface 431 may face the eighth lens surface 425b of the fourth lens 425, and the exit surface 433 may face the optical filter 443.

In one embodiment, the optical filter 443 may be disposed between the reflective member 430 and the image sensor 441. For example, the optical filter 443 may be disposed to be spaced apart from the image sensor 441 by a specified distance. The optical filter 443 may be configured to block light having a designated wavelength band. For example, the optical filter may include an infrared filter (e.g., an IR filter) that blocks light in the infrared band. According to various embodiments, the sensor assembly 440 (e.g., the sensor assembly 440 in FIG. 4a) may include a filter holder (not illustrated) on which the optical filter 443 is disposed, and the filter holder may be disposed on the sensor substrate 442 so that the optical filter 443 overlaps the image sensor 441.

The lens optical system of the camera module 400 according to one embodiment may be configured to satisfy one or more optical conditions in order to miniaturize the camera module 400 and secure optical performance. For example, the plurality of lenses 422, 423, 424, and 425 of the lens unit 421, the reflective member 430, and the image sensor 441 may be designed to satisfy at least one of following Equations 1 to 4 related to optical distances between them. Here, the "optical distance" may refer to the distance on the optical path (e.g., the optical path OP in FIGS. 6, 8, 10, 12, and 14) along which external light incident on the lens unit 421 along the optical axis OA travels toward the image sensor 441.

In one embodiment, the lens optical system of the camera module 400 may satisfy Equation 1 below. Equation 1 may be a condition for limiting the ratio between the optical distance between the first lens 422 and the reflective member 430 and the optical distance between the first lens 422 and the image sensor 441.

$$[\text{Equation 1}]$$

$$0.2 \leq D1/DT \leq 0.6$$

In Equation 1 above, "D1" may represent the optical distance between the first lens surface 422a of the first lens 422 and the reflective member 430, and "DT" may represent the optical distance between the first lens surface 422a of the first lens 422 and the image sensor 441. For example, "D1" may be the length on the optical axis OA from the first lens surface 422a to the incidence surface 431 of the reflective member 430. "DT" may be the length obtained by adding the length from the first lens surface 422a of the first lens 422 to the reflective surface 435 of the reflective member 430 and the length from the reflective surface 435 of the reflective member 430 to the upper surface 441a of the image sensor 441 on the traveling path of external light incident along the optical axis OA.

The lens optical system of the camera module 400 according to one embodiment may satisfy Equation 1, thereby securing optical performance and, at the same time, lowering the height (e.g., the length in the z-axis direction) of the camera module 400. For example, regarding Equation 1, when D1/DT is less than a lower limit value, optical performance may deteriorate due to insufficient optical aberrations, and when it is larger than an upper limit value, the height of the camera module 400 may increase, making miniaturization difficult.

In one embodiment, the lens optical system of the camera module 400 may satisfy Equation 2 below. Equation 2 may be a condition for limiting the ratio between the optical distance between the reflective member 430 and the image sensor 441 and the optical distance between the first lens 422 and the reflective member 430.

$$[\text{Equation 2}]$$

$$1 \leq D2/D1 \leq 2.5$$

In Equation 2 above, "D1" may represent the optical distance between the first lens surface 422a of the first lens 422 and the reflective member 430, and "D2" may represent the optical distance between the reflective member 430 and the image sensor 441. "D1" may refer to the same distance as described in Equation 1. "D2" may refer to the optical distance between the exit surface 433 of the reflective member 430 and the upper surface 441a of the image sensor 441. For example, "D2" may be the length from the exit surface 433 of the reflective member 430 to the upper surface 441a of the image sensor 441 on the traveling path of external light incident along the optical axis OA.

The lens optical system of the camera module 400 according to one embodiment may satisfy Equation 2, so that it may be designed to prevent a flare phenomenon and at the same time, limit the size of the camera module 400 (e.g., the ratio between the height H1 of the camera module 400 and the width W of the camera module 400 in FIG. 4a to a certain size. For example, regarding Equation 2, when D2/D1 is less than a lower limit value, the reflective member 430 and the image sensor 441 may become closer and the flare phenomenon may occur, and when it is greater than an upper limit value, the width of the camera module 400 (e.g.; the length in the x-axis direction) increases, making miniaturization difficult. According to Equation 2, the height of the camera module 400 protruding from the electronic device 300 may be reduced and when the camera module 400 is mounted inside the housing 310, the size of space required by the width of the camera module 400 may be limited to an appropriate level.

In one embodiment, the lens optical system of the camera module 400 may satisfy Equation 3 below. Equation 3 may be a condition for limiting the ratio between the optical distance between the fourth lens 425 and the reflective member 430 and the thickness of the first lens 422.

$$[\text{Equation 3}]$$

$$0.15 \leq D3/T \leq 0.65$$

In Equation 3 above, "D3" may represent the optical distance between the eighth lens surface 425b of the fourth lens 425 and the incidence surface 431 of the reflective member 430, and "T" may represent the thickness of the first lens 422 on the optical axis OA. For example, "D3" may be the length on the optical axis OA from the eighth lens surface 425b of the fourth lens 425 to the incidence surface 431 of the reflective member 430. 'T' may be the length on the optical axis OA from the first lens surface 422a of the first lens 422 to the second lens surface 422b thereof. For example, "D3" may be the length from the eighth lens surface 425b of the fourth lens 425 to the incidence surface 431 of the reflective member 430 on the traveling path of external light incident along the optical axis OA.

The lens optical system of the camera module 400 according to one embodiment may satisfy Equation 3, thereby preventing the fourth lens 425 from colliding with the reflective member 430 due to an external impact, and at the same time, reducing the height of the camera module 400. For example, regarding Equation 3, when D3/T is smaller than a lower limit value, the lens unit 421 and the reflective member 430 may contact each other when an external impact is applied or the electronic device drops, and when it is greater than an upper limit value, the distance between the fourth lens 425 and the reflective member 430 increases, and thus the height increases, making miniaturization difficult.

In one embodiment, the lens optical system of the camera module 400 may satisfy Equation 4 below. Equation 4 may be a condition for limiting the ratio between a focal length of the first lens 422 and a composite focal length of the entire lens optical system.

$$[\text{Equation 4}]$$

$$0.3 \leq f1/f \leq 0.6$$

In Equation 4 above, "f1" may represent the focal length of the first lens 422, which has the strongest power among the lenses of the lens unit 421, and "f" may represent a composite focal length of the lens optical system (e.g., the lens unit 421 and the reflective member 430).

The lens optical system of the camera module 400 according to one embodiment satisfies Equation 4, thereby reducing the occurrence of optical aberration. For example, regarding Equation 4, when f1/f is smaller than a lower limit value or greater than an upper limit value, the power of the first lens 422 may become stronger or weaker than a certain reference, thereby increasing the occurrence of optical aberration.

According to one embodiment, the lens unit 421 of the camera module 400 may include at least two aspherical lenses. An aspheric equation (e.g., a sag value) of the aspherical lens may be expressed as shown in Equation 5 below.

$$[\text{Equation 5}]$$

$$z = \frac{c'y^2}{1 + \sqrt{1 - (K+1)c'^2 y^2}} + Ay^4 + By^6 + Cy^8 + Dy^{10} + Ey^{12} + Fy^{14} + Gy^{16} + Hy^{18} + Jy^{20}$$

In Equation 5, z may represent a distance from the vertex of the lens in the direction of the optical axis OA, y may represent a distance in the direction perpendicular to the optical axis OA, c' may represent a reciprocal of a radius of curvature at the vertex of the lens (1/R), and K may represent a Conic constant. In addition, A, B, C, D, E, F, G, H, and J may each represent an aspherical coefficient.

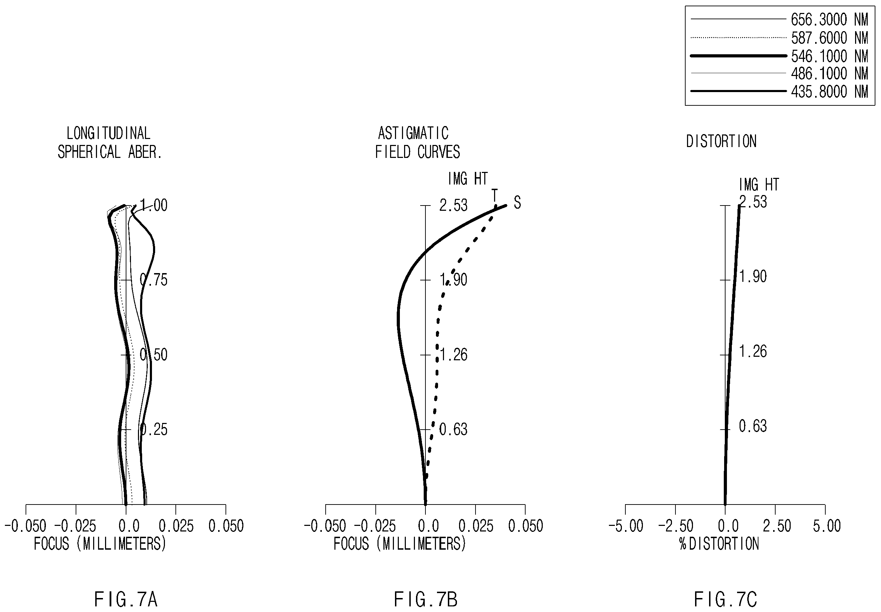

FIG. 6 is a view showing a configuration of a lens optical system according to a first embodiment. FIG. 7 is a view showing spherical aberration, astigmatism, and distortion aberration of the lens optical system according to the first embodiment in FIG. 6.

Referring to FIG. 6, a camera module (e.g., the camera module 400 in FIGS. 4a and 4b) may include a lens optical system 500 according to the first embodiment.

In the first embodiment, the lens optical system 500 may include a plurality of lenses 501 (e.g., the lens unit 421 in FIG. 4a) and a reflective member 550 (e.g., the reflective member 430 in FIG. 4a), an optical filter 560 (e.g., the optical filter 443 in FIG. 4a), and an image sensor 570 (e.g., the image sensor 441 in FIG. 4a).

In the first embodiment, the plurality of lenses 501 may include a first lens 510, a second lens 520, a third lens 530, and a fourth lens 540 that are sequentially arranged toward the reflective member 550 from an object OBJ. For example, the first lens 510 may be disposed closest to the object OBJ, and the fourth lens 540 may be disposed closest to the reflective member 550. The plurality of lenses 501 may include lens surfaces S1, S3, S5, and S7 facing the object OBJ and lens surfaces S2, S4, S6, and S8 facing the reflective member 550, respectively.

In the first embodiment, an optical path OP, which is a path along which external light incident on the plurality of lenses 501 along an optical axis OA travels, may be defined in the lens optical system 500. The reflective member 550 may be configured to change the path of light passing through the plurality of lenses 501. For example, light that has passed through the plurality of lenses 501 may be incident on the image sensor 570 by being reflected or refracted by the reflective member 550. The reflective member 550 may be disposed between the plurality of lenses 501 and the image sensor 570 (or the optical filter 560) on the optical path OP. The light that has passed through the plurality of lenses 501 and has been incident on the incidence surface S9 of the reflective member 550 may be reflected in a direction substantially perpendicular to an incident direction by the reflective surface S10 of the reflective member 550, and then, may be emitted toward the image sensor 570 from an exit surface S11 of the reflective member 550.

In the first embodiment, the first lens 510, the third lens 530, and the fourth lens 540 may have positive refractive power. The second lens 520 may have negative refractive power. The first lens 510 may have a lens surface S1 facing the object OBJ formed in a convex shape. The fourth lens 540 may have a lens surface S8 facing the reflective member 550 formed in a concave shape.

In the first embodiment, the plurality of lenses 501 may include at least two aspherical lenses. For example, the first lens 510, the second lens 520, the third lens 530, and the fourth lens 540 may all be aspherical lenses. In each of the first lens 510, the second lens 520, the third lens 530, and the fourth lens 540, at least one of the lens surface facing the object OBJ and the lens surface facing the reflective member 550 may be formed as an aspherical surface. For example, in the first lens 510, the second lens 520, the third lens 530, and the fourth lens 540, the lens surfaces S1, S3, S5, and S7 on the object side and the lens surfaces S2, S4, S6, and S8 on the reflective member side may be all formed as aspherical surfaces.

Various lens data of the lens optical system 500 according to the first embodiment may be expressed as shown in Table 1 below.

[Table 1]

| Surface | R (mm) | Dn (mm) | Nd | Vd |
|---|---|---|---|---|
| OBJ | infinity | infinity | | |
| S1(stp)* | 2.359 | 0.865 | 1.56717 | 37.39 |
| S2* | -5.676 | 0.273 | | |
| S3* | -5.664 | 0.418 | 1.63914 | 23.51 |
| S4* | 1.277 | 0.27 | | |
| S5* | 3.472 | 0.361 | 1.63914 | 23.51 |
| S6* | 54.929 | 0.05 | | |
| S7* | 2.166 | 0.363 | 1.56717 | 37.39 |
| S8* | 4.754 | 0.4 | | |
| S9 | infinity | 1.2 | 1.834 | 37.34 |
| S10 | infinity | 1.2 | 1.834 | 37.34 |
| S11 | infinity | 2.632 | | |
| S12 | infinity | 0.21 | 1.5168 | 64.2 |
| S13 | infinity | 1.252 | | |
| IMG | infinity | 0 | | |

In Table 1, S1 to S13 may refer to surfaces (or optical surfaces) of the plurality of lenses 501, the reflective member 550, and the optical filter 560, and IMG may refer to the image plane of the image sensor 570. For example, S1 to S8 may indicate surfaces of the first lens 510, the second lens 520, the third lens 530, and the fourth lens 540 (e.g., the lens surfaces on the object side and the lens surfaces on the reflective member side). S9 to S11 may indicate surfaces (e.g., the incidence surface, the reflective surface, and the exit surface) of the reflective member 550. S12 and S13 may indicate surfaces (e.g., a surface on the reflective member side and a surface on the image sensor side) of the optical filter 560. In Table 1, the "*" mark indicates that the optical surface is formed as an aspherical surface. In Table 1, the "stp" mark indicates that an aperture is disposed on a corresponding lens surface. For example, according to the lens optical system 500 of the first embodiment, the aperture may be disposed on the lens surface S1 of the first lens 910 facing the object OBJ.

In Table 1 above, R may refer to the radius of curvature of each of the optical surfaces, Dn may refer to the thickness of the lens or a gap between optical surfaces, Nd may refer to the refractive index, and Vd may refer to the Abbe number. For example, Dn written in a Si (i = 1 to 13) row may refer to a distance between an ith optical surface Si and an i+1th optical surface Si+1 (e.g., the distance on the optical axis OA). Nd written in the Si (i = 1 to 13) row may refer to a refractive index at a d line (587.5618 nm) of the ith optical surface Si, and Vd may refer to an Abbe number of the ith optical surface Si.

Aspheric coefficients of the plurality of lenses 501 according to the first embodiment may be expressed as shown in Table 2 below. The aspherical coefficients may be calculated based on Equation 5 described above.

[Table 2]

| Surface | K | A | B | C | D |
|---|---|---|---|---|---|
| S1 | 0 | 1.28E-03 | 4.38E-03 | -2.96E-03 | 7.36E-04 |
| S2 | -1 | 8.06E-02 | -4.25E-02 | 1.42E-02 | -1.68E-03 |
| S3 | -1 | 1.54E-02 | 2.12E-04 | 2.53E-03 | -6.63E-04 |
| S4 | -2.9284 | -4.62E-02 | 5.83E-02 | -1.74E-02 | 1.63E-03 |
| S5 | -1 | 5.03E-03 | -3.35E-02 | 3.43E-02 | -9.06E-03 |
| S6 | 1 | 2.82E-03 | -5.13E-03 | 2.42E-02 | -4.69E-03 |
| S7 | 1 | -8.48E-02 | -5.15E-03 | 1 . 96E-02 | -6.40E-03 |
| S8 | 1 | -7.53E-03 | -3.13E-02 | 1.97E-02 | -3.44E-03 |

Referring to FIG. 7, (a) in FIG. 7 is a graph showing the spherical aberration of the lens optical system 500 according to the first embodiment shown in FIG. 6, (b) in FIG. 7 is a graph showing astigmatism of the lens optical system 500 according to the first embodiment shown in FIG. 6, and (c) in FIG. 7 is a graph showing a distortion aberration of the lens optical system 500 according to the first embodiment shown in FIG. 6. (a) in FIG. 7 is a graph showing the change in longitudinal spherical aberration according to the wavelength of light, where a horizontal axis may represent a degree of longitudinal spherical aberration, and a vertical axis may represent a normalized value of a distance (or an image height) from the center of the optical axis. For example, the longitudinal spherical aberration may be expressed for light with wavelengths of 656.3000 nm, 587.6000 nm, 546.1000 nm, 486.1000 nm, and 435.8000 nm.

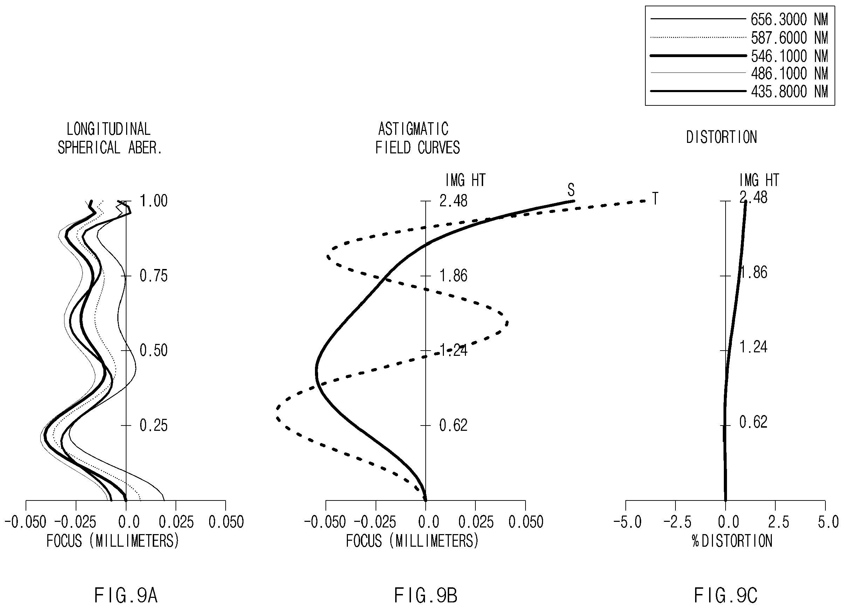

(b) in FIG. 7 is a graph showing astigmatism for light with a wavelength of 546.1000 nm, and may represent astigmatic field curves. In (b) in FIG. 7, a dotted line T may represent astigmatism in a tangential direction (e.g., tangential field curvature), and a solid line S may represent astigmatism in a sagittal direction (e.g., sagittal field curvature). In the graph of (b) in FIG. 7, the vertical axis represents the image height (or image size), the horizontal axis represents the focal length (in mm), and the same applies to astigmatism graphs described below (e.g., astigmatism graphs in FIGS. 9, 11, 13, and 15).

(c) in FIG. 7 is a graph showing a distortion rate for light with a wavelength of 546.1000 nm, where the vertical axis represents the image height (or the image size), the horizontal axis represents the degree of distortion (in %), and the same applies to distortion aberration graphs described below (e.g., distortion aberration graphs in FIGS. 9, 11, 13, and 15). Images captured through the lens optical system 500 may be somewhat distorted at points off the optical axis OA, and may provide good optical characteristics with a distortion rate of less than 3%.

FIG. 8 is a view showing a configuration of a lens optical system according to a second embodiment. FIG. 9 is a view showing spherical aberration, astigmatism, and distortion aberration of the lens optical system according to the second embodiment in FIG. 8.

Referring to FIG. 8, a camera module (e.g., the camera module 400 in FIGS. 4a and 4b) may include a lens optical system 600 according to the second embodiment.

In the second embodiment, the lens optical system 600 may include a plurality of lenses 601 (e.g., the lens unit 421 in FIG. 4a) and a reflective member 650 (e.g., the reflective member 430 in FIG. 4a), an optical filter 660 (e.g., the optical filter 443 in FIG. 4a), and an image sensor 670 (e.g., the image sensor 441 in FIG. 4a). The components included in the lens optical system 600 according to the second embodiment may be the same as or similar to the components included in the lens optical system (e.g., the lens optical system 500 in FIG. 6) according to the first embodiment, and thus redundant descriptions thereof will be omitted.

In the second embodiment, the plurality of lenses 601 may include a first lens 610, a second lens 620, a third lens 630, and a fourth lens 640 that are sequentially arranged toward the reflective member 650 from an object OBJ. The plurality of lenses 601 may include lens surfaces S1, S3, S5, and S7 facing the object OBJ and lens surfaces S2, S4, S6, and S8 facing the reflective member 650, respectively.

In the second embodiment, an optical path OP, which is a path along which external light incident on the plurality of lenses 601 along an optical axis OA travels, may be defined in the lens optical system 600. The reflective member 650 may be configured to change the path of light passing through the plurality of lenses 601. The reflective member 650 may be disposed between the plurality of lenses 601 and the image sensor 670 (or optical filter 660) on the optical path OP.

In the second embodiment, the first lens 610, the third lens 630, and the fourth lens 640 may have positive refractive power. The second lens 620 may have negative refractive power. The first lens 610 may have a lens surface S1 facing the object OBJ formed in a convex shape. The fourth lens 640 may have a lens surface S8 facing the reflective member 650 formed in a concave shape.

In the second embodiment, the plurality of lenses 601 may include at least two aspherical lenses. For example, the first lens 610, the second lens 620, the third lens 630, and the fourth lens 640 may all be aspherical lenses. In the first lens 610, the second lens 620, the third lens 630, and the fourth lens 640, the lens surfaces S1, S3, S5, and S7 on the object side and the lens surfaces S2, S4, S6, and S8 on the reflective member side may be all formed to be aspherical.

Various lens data of the lens optical system 600 according to the second embodiment may be expressed as shown in Table 3 below.

[Table 3]

| Surface | R (mm) | Dn (mm) | Nd | Vd |
|---|---|---|---|---|
| OBJ | infinity | infinity | | |
| SI(stp)* | 1.931 | 0.852 | 1.56717 | 37.39 |
| S2* | -57.295 | 0.298 | | |
| S3* | 15.197 | 0.23 | 1.67073 | 19.23 |
| S4* | 1.103 | 0.268 | | |
| S5* | 2.824 | 0.394 | 1.67073 | 19.23 |
| S6* | -18.38 | 0.02 | | |
| S7* | 2.085 | 0.276 | 1.5441 | 56.09 |
| S8* | 2.349 | 0.312 | | |
| S9 | infinity | 1.2 | 1.834 | 37.34 |
| S10 | infinity | 1.2 | 1.834 | 37.34 |
| S11 | infinity | 2.975 | | |
| S12 | infinity | 0.11 | 1.5168 | 64.2 |
| S13 | infinity | 0.056 | | |
| IMG | infinity | -0.02 | | |

In Table 3, S1 to S13 may refer to surfaces (or optical surfaces) of the plurality of lenses 601, the reflective member 650, and the optical filter 660, and IMG may refer to the image plane of the image sensor 670. For example, S1 to S8 may indicate the surfaces of the first lens 610, the second lens 620, the third lens 630, and the fourth lens 640. S9 to S11 may indicate the surfaces of the reflective member 650. S12 and S13 may indicate the surfaces of the optical filter 660. In Table 3, the "*" mark indicates that the optical surface is formed as an aspherical surface. In Table 3, the "stp" mark indicates that an aperture is disposed on a corresponding lens surface. For example, according to the lens optical system 600 of the second embodiment, the aperture may be disposed on the lens surface S1 of the first lens 610 facing the object OBJ.

In Table 3 above, R may refer to the radius of curvature of each of the optical surfaces, Dn may refer to the thickness of the lens or a gap between optical surfaces, Nd may refer to the refractive index, and Vd may refer to the Abbe number.

Aspheric coefficients of the plurality of lenses 601 according to the second embodiment may be expressed as shown in Table 4 and Table 5 below.

[Table 4]

| Surface | K | A | B | C | D |
|---|---|---|---|---|---|
| S1 | -0.07724 | 5.30E-03 | 3.21E-03 | -6.52E-04 | -4.01E-04 |
| S2 | -1 | 1.01E-01 | -7.82E-02 | 4.24E-02 | -1.08E-02 |
| S3 | -1 | -7.47E-02 | 4.59E-02 | 2.87E-02 | -2.74E-02 |
| S4 | -3.88212 | 2.92E-03 | -9.95E-02 | 2.01E-01 | -1.56E-02 |
| S5 | -7.61527 | 4.02E-02 | 2.52E-02 | -7.49E-01 | 2.50E+00 |
| S6 | 18.67266 | 2.41E-01 | 1.33E+00 | 3.89E+00 | 6.52E+00 |
| S7 | -1 | 1.90E-01 | 2.10E+00 | 7.29E+00 | 1.57E+01 |
| S8 | -0.99874 | -8.31E-02 | 9.17E-03 | -6.93E-01 | 3.06E+00 |

[Table 5]

| Surfac e | E | F | G | H | J |
|---|---|---|---|---|---|
| S1 | 6.34E-04 | 0.0003635 | -2.45E-05 | 0.0001836 7 | -7.04E-05 |
| S2 | 1.84E-03 | 0.0002815 | 0.0006919 | 0.0002061 3 | 7.67E-06 |
| S3 | 4.05E-03 | - 0.0002948 | 0.0007943 8 | 0.0003435 5 | - 0.0002505 |
| S4 | -1.23E-01 | 0.0621819 7 | -2.66E-05 | 0.0003396 8 | 0.0009531 2 |
| S5 | 4.07E+0 0 | 3.8812232 9 | 2.2220919 | 0.7046102 5 | 0.0936502 |
| S6 | 6.97E+0 0 | 4.8458263 | 2.0818290 7 | 0.4762954 | 0.0365244 5 |
| S7 | 2.32E+0 1 | - 23.288759 | 15.149978 6 | - 5.6863201 | 0.9269946 3 |
| S8 | 6.61E+0 0 | 8.3440101 1 | 6.3003151 | 2.6432775 3 | 0.4745595 |

Referring to FIG. 9, (a) in FIG. 9 is a graph showing the spherical aberration of the lens optical system 600 according to the second embodiment shown in FIG. 8, (b) in FIG. 9 is a graph showing astigmatism of the lens optical system 600 according to the second embodiment shown in FIG. 8, and (c) in FIG. 9 is a graph showing a distortion aberration of the lens optical system 600 according to the second embodiment shown in FIG. 8. (a) in FIG. 9 is a graph showing the change in longitudinal spherical aberration according to the wavelength of light, where a horizontal axis may represent a degree of longitudinal spherical aberration, and a vertical axis may represent a normalized value of a distance from the center of the optical axis. For example, the longitudinal spherical aberration may be expressed for light with wavelengths of 656.3000 nm, 587.6000 nm, 546.1000 nm, 486.1000 nm, and 435.8000 nm.

(b) in FIG. 9 is a graph showing astigmatism for light with a wavelength of 546.1000 nm, and may represent astigmatic field curves. In (b) in FIG. 9, a dotted line T may represent astigmatism in a tangential direction (e.g., tangential field curvature), and a solid line S may represent astigmatism in a sagittal direction (e.g., sagittal field curvature).

(c) in FIG. 9 is a graph showing the distortion rate for light with a wavelength of 546.1000 nm. Images captured through the lens optical system 600 may be somewhat distorted at points off the optical axis OA, and may provide good optical characteristics with a distortion rate of less than 3%.

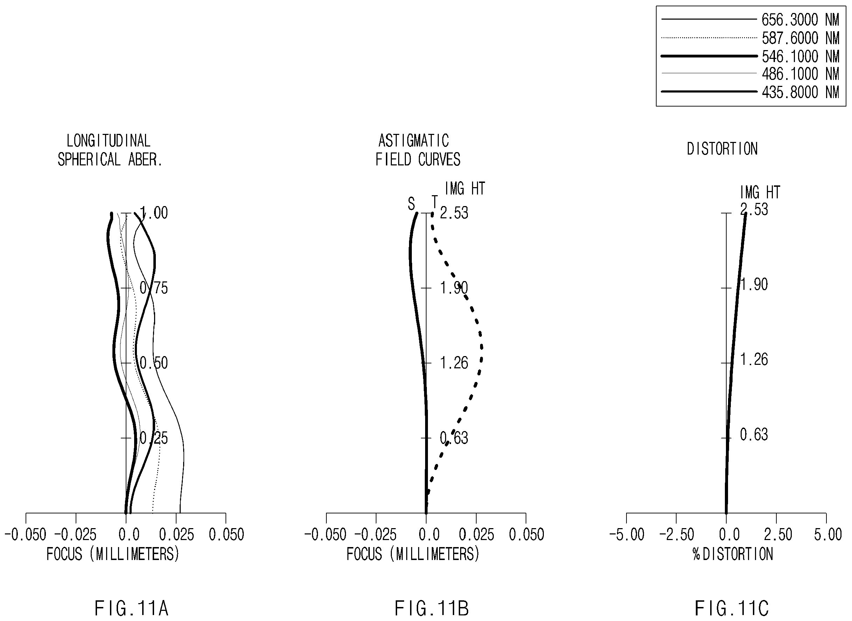

FIG. 10 is a view showing a configuration of a lens optical system according to a third embodiment. FIG. 11 is a view showing spherical aberration, astigmatism, and distortion aberration of the lens optical system according to the third embodiment in FIG. 10.

Referring to FIG. 10, a camera module (e.g., the camera module 400 in FIGS. 4a and 4b) may include a lens optical system 700 according to the third embodiment.

In the third embodiment, the lens optical system 700 may include a plurality of lenses 701 (e.g., the lens unit 421 in FIG. 4a) and a reflective member 750 (e.g., the reflective member 430 in FIG. 4a), an optical filter 760 (e.g., the optical filter 443 in FIG. 4a), and an image sensor 770 (e.g., the image sensor 441 in FIG. 4a). The components included in the lens optical system 700 according to the third embodiment may be the same as or similar to the components included in the lens optical system (e.g., the lens optical system 500 in FIG. 6) according to the first embodiment, and thus redundant descriptions thereof will be omitted.

In the third embodiment, the plurality of lenses 701 may include a first lens 710, a second lens 720, a third lens 730, and a fourth lens 740 that are sequentially arranged toward the reflective member 750 from an object OBJ. The plurality of lenses 701 may include lens surfaces S1, S3, S5, and S7 facing the object OBJ and lens surfaces S2, S4, S6, and S8 facing the reflective member 750, respectively.

In the third embodiment, an optical path OP, which is a path along which external light incident on the plurality of lenses 701 along an optical axis OA travels, may be defined in the lens optical system 700. The reflective member 750 may be configured to change the path of light passing through the plurality of lenses 701. The reflective member 750 may be disposed between the plurality of lenses 701 and the image sensor 770 (or optical filter 760) on the optical path OP.

In the third embodiment, the first lens 710, the third lens 730, and the fourth lens 740 may have positive refractive power. The second lens 720 may have negative refractive power. The first lens 710 may have a lens surface S1 facing the object OBJ formed in a convex shape. The fourth lens 740 may have a lens surface S8 facing the reflective member 750 formed in a concave shape.

In the third embodiment, the plurality of lenses 701 may include at least two aspherical lenses. For example, the first lens 710, the second lens 720, the third lens 730, and the fourth lens 740 may all be aspherical lenses. In the first lens 710, the second lens 720, the third lens 730, and the fourth lens 740, the lens surfaces S1, S3, S5, and S7 on the object side and the lens surfaces S2, S4, S6, and S8 on the reflective member side may be all formed to be aspherical.

Various lens data of the lens optical system 700 according to the third embodiment may be expressed as shown in Table 6 below.

[Table 6]

| Surface | R (mm) | Dn (mm) | Nd | Vd |
|---|---|---|---|---|
| OBJ | infinity | infinity | | |
| S1(stp)* | 2.731 | 0.972 | 1.5441 | 56.09 |
| S2* | -5.599 | 0.326 | | |
| S3* | -4.651 | 0.324 | 1.56717 | 37.39 |
| S4* | 1.919 | 0.37 | | |
| S5* | -36.03 | 0.265 | 1.61444 | 25.94 |
| S6* | -12.755 | 0.059 | | |
| S7* | 2.339 | 0.731 | 1.5441 | 56.09 |
| S8* | 5.505 | 0.446 | | |
| S9 | infinity | 1.406 | 1.834 | 37.34 |
| S10 | infinity | 1.406 | 1.834 | 37.34 |
| S11 | infinity | 3.083 | | |
| S12 | infinity | 0.25 | 1.5168 | 64.2 |
| S13 | infinity | 1.38 | | |
| IMG | infinity | 0 | | |

In Table 6, S1 to S13 may refer to surfaces (or optical surfaces) of the plurality of lenses 701, the reflective member 750, and the optical filter 760, and IMG may refer to the image plane of the image sensor 770. For example, S1 to S8 may indicate the surfaces of the first lens 710, the second lens 720, the third lens 730, and the fourth lens 740. S9 to S11 may indicate the surfaces of the reflective member 750. S12 and S13 may indicate the surfaces of the optical filter 760. In Table 6, the "*" mark indicates that the optical surface is formed as an aspherical surface. In Table 6, the "stp" mark indicates that an aperture is disposed on a corresponding lens surface. For example, according to the lens optical system 700 of the third embodiment, the aperture may be disposed on the lens surface S1 of the first lens 710 facing the object OBJ.

In Table 6 above, R may refer to the radius of curvature of each of the optical surfaces, Dn may refer to the thickness of the lens or a gap between optical surfaces, Nd may refer to the refractive index, and Vd may refer to the Abbe number.

Aspheric coefficients of the plurality of lenses 701 according to the third embodiment may be expressed as shown in Table 7 below.

[Table 7]

| Surface | K | A | B | C | D |
|---|---|---|---|---|---|
| S1 | 0 | -1.47E-03 | 1.70E-03 | -1.31E-03 | 2.05E-04 |
| S2 | -1 | 5.52E-02 | -2.11E-02 | 4.69E-03 | -3.18E-04 |
| S3 | -1 | 6.07E-02 | -2.27E-02 | 6.78E-03 | -7.37E-04 |
| S4 | -2.62964 | -4.76E-02 | 3.84E-02 | -1.59E-02 | 1.70E-03 |
| S5 | -1 | 1.54E-03 | -1.02E-02 | 1.88E-02 | -4.73E-03 |
| S6 | 1 | 2.81E-02 | -2.00E-02 | 2.11E-02 | -1.84E-03 |
| S7 | 1 | -4.64E-02 | -1.44E-02 | 7.16E-03 | -1.88E-03 |
| S8 | 1 | -6.99E-03 | -6.36E-03 | 6.10E-04 | 6.25E-05 |

Referring to FIG. 11, (a) in FIG. 11 is a graph showing the spherical aberration of the lens optical system 700 according to the third embodiment shown in FIG. 10, (b) in FIG. 11 is a graph showing astigmatism of the lens optical system 700 according to the third embodiment shown in FIG. 10, and (c) in FIG. 11 is a graph showing a distortion aberration of the lens optical system 700 according to the third embodiment shown in FIG. 10. (a) in FIG. 11 is a graph showing the change in longitudinal spherical aberration according to the wavelength of light, where a horizontal axis may represent a degree of longitudinal spherical aberration, and a vertical axis may represent a normalized value of a distance from the center of the optical axis. For example, the longitudinal spherical aberration may be expressed for light with wavelengths of 656.3000 nm, 587.6000 nm, 546.1000 nm, 486.1000 nm, and 435.8000 nm.

(b) in FIG. 11 is a graph showing astigmatism for light with a wavelength of 546.1000 nm, and may represent astigmatic field curves. In (b) in FIG. 11, a dotted line T may represent astigmatism in a tangential direction (e.g., tangential field curvature), and a solid line S may represent astigmatism in a sagittal direction (e.g., sagittal field curvature).

(c) in FIG. 11 is a graph showing the distortion rate for light with a wavelength of 546.1000 nm. Images captured through the lens optical system 700 may be somewhat distorted at points off the optical axis OA, and may provide good optical characteristics with a distortion rate of less than 3%.

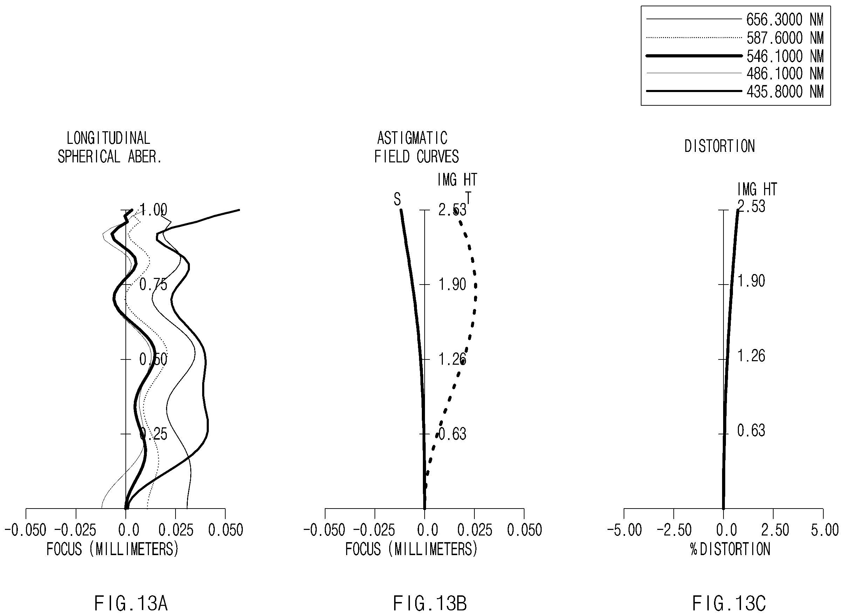

FIG. 12 is a view showing a configuration of a lens optical system according to a fourth embodiment. FIG. 13 is a view showing spherical aberration, astigmatism, and distortion aberration of the lens optical system according to the fourth embodiment in FIG. 12.

Referring to FIG. 12, a camera module (e.g., the camera module 400 in FIGS. 4a and 4b) may include a lens optical system 800 according to the fourth embodiment.

In the fourth embodiment, the lens optical system 800 may include a plurality of lenses 801 (e.g., the lens unit 421 in FIG. 4a) and a reflective member 850 (e.g., the reflective member 430 in FIG. 4a), an optical filter 860 (e.g., the optical filter 443 in FIG. 4a), and an image sensor 870 (e.g., the image sensor 441 in FIG. 4a). The components included in the lens optical system 800 according to the fourth embodiment may be the same as or similar to the components included in the lens optical system (e.g., the lens optical system 500 in FIG. 6) according to the first embodiment, and thus redundant descriptions thereof will be omitted.

In the fourth embodiment, the plurality of lenses 801 may include a first lens 810, a second lens 820, a third lens 830, and a fourth lens 840 that are sequentially arranged toward the reflective member 850 from an object OBJ. The plurality of lenses 801 may include lens surfaces S1, S3, S5, and S7 facing the object OBJ and lens surfaces S2, S4, S6, and S8 facing the reflective member 850, respectively.

In the fourth embodiment, an optical path OP, which is a path along which external light incident on the plurality of lenses 801 along an optical axis OA travels, may be defined in the lens optical system 800. The reflective member 850 may be configured to change the path of light passing through the plurality of lenses 801. The reflective member 850 may be disposed between the plurality of lenses 701 and the image sensor 870 (or optical filter 860) on the optical path OP.

In the fourth embodiment, the first lens 810 and the third lens 830 may have positive refractive power. The second lens 820 and the fourth lens 840 may have negative refractive power. The first lens 810 may have a lens surface S1 facing the object OBJ formed in a convex shape. The fourth lens 840 may have a lens surface S8 facing the reflective member 850 formed in a concave shape.

In the fourth embodiment, the plurality of lenses 801 may include at least two aspherical lenses. For example, the first lens 810, the second lens 820, the third lens 830, and the fourth lens 840 may all be aspherical lenses. In the first lens 810, the second lens 820, the third lens 830, and the fourth lens 840, the lens surfaces S1, S3, S5, and S7 on the object side and the lens surfaces S2, S4, S6, and S8 on the reflective member side may be all formed to be aspherical.

Various lens data of the lens optical system 800 according to the fourth embodiment may be expressed as shown in Table 8 below.

[Table 8]

| Surface | R (mm) | Dn (mm) | Nd | Vd |
|---|---|---|---|---|
| OBJ | infinity | infinity | | |
| S1* | 2.946 | 1.353 | 1.56717 | 37.39 |
| S2* | -18.585 | 0.354 | | |
| S3* | 26.274 | 0.329 | 1.66073 | 20.37 |
| S4 (stp) * | 1.712 | 0.476 | | |
| S5* | 5.29 | 0.746 | 1.63914 | 23.51 |
| S6* | -8.018 | 0.072 | | |
| S7* | 5.998 | 0.347 | 1.5348 | 55.71 |
| S8* | 4.065 | 0.333 | | |
| S9 | infinity | 1.862 | 1.834 | 37.34 |
| S10 | infinity | 1.862 | 1.834 | 37.34 |
| S11 | infinity | 4.63 | | |
| S12 | infinity | 0.15 | 1.5168 | 64.2 |
| S13 | infinity | 0.873 | | |
| IMG | infinity | 0.01 | | |

In Table 8, S1 to S13 may refer to surfaces (or optical surfaces) of the plurality of lenses 801, the reflective member 850, and the optical filter 860, and IMG may refer to the image plane of the image sensor 870. For example, S1 to S8 may indicate the surfaces of the first lens 810, the second lens 820, the third lens 830, and the fourth lens 840. S9 to S11 may indicate the surfaces of the reflective member 850. S12 and S13 may indicate the surfaces of the optical filter 860. In Table 8, the "*" mark indicates that the optical surface is formed as an aspherical surface. In Table 8, the "stp" mark indicates that an aperture is disposed on a corresponding lens surface. For example, according to the lens optical system 800 of the fourth embodiment, the aperture may be disposed on the lens surface S4 of the second lens 820 facing the reflective member 850.

In Table 8 above, R may refer to the radius of curvature of each of the optical surfaces, Dn may refer to the thickness of the lens or a gap between optical surfaces, Nd may refer to the refractive index, and Vd may refer to the Abbe number.

Aspheric coefficients of the plurality of lenses 801 according to the fourth embodiment may be expressed as shown in Table 9 and Table 10 below.

[Table 9]

| Surface | K | A | B | C | D |
|---|---|---|---|---|---|
| S1 | 0 | 9.32E-04 | 4.86E-04 | -1.50E-04 | 1.35E-05 |
| S2 | 0 | 3.18E-02 | -1.23E-02 | 3.44E-03 | -4.36E-04 |

(continued)

| Surface | K | A | B | C | D |
|---|---|---|---|---|---|
| S3 | -33.0558 | -2.50E-02 | 7.49E-03 | 2.40E-03 | -1.09E-03 |
| S4 | -4.03823 | 4.37E-03 | -1.61E-02 | 1.60E-02 | -5.21E-04 |
| S5 | 0 | -3.61E-03 | 4.04E-03 | -6.00E-02 | 9.87E-02 |
| S6 | 0 | 8.85E-02 | -2.27E-01 | 3.15E-01 | -2.58E-01 |
| S7 | -1 | 8.02E-02 | -3.01E-01 | 4.30E-01 | -3.49E-01 |
| S8 | -1 | -1.76E-02 | -3.56E-02 | 3.25E-02 | 1.73E-03 |

[Table 10]

| Surface | E | F | G | H | J |
|---|---|---|---|---|---|
| S1 | 1.41E-05 | -4.46E-06 | -3.87E-07 | 4.12E-07 | -5.54E-08 |
| S2 | 3.53E-05 | -2.30E-06 | -3.13E-06 | 4.65E-07 | 9.21E-09 |
| S3 | 6.85E-05 | -7.06E-06 | 2.75E-06 | 7.33E-07 | -1.60E-07 |
| S4 | -2.32E-03 | 0.000506 | -6.85E-06 | -6.96E-08 | -2.97E-08 |
| S5 | -7.86E-02 | 0.036454 | -0.01018 | 0.001579 | -0.0001 |
| S6 | 1.34E-01 | -0.04555 | 0.009541 | -0.00106 | 4.18E-05 |
| S7 | 1.72E-01 | -0.05166 | 0.008438 | -0.00046 | -3.33E-05 |
| S8 | -2.19E-02 | 0.016374 | -0.00578 | 0.00103 | -7.48E-05 |

Referring to FIG. 13, (a) in FIG. 13 is a graph showing the spherical aberration of the lens optical system 800 according to the fourth embodiment shown in FIG. 12, (b) in FIG. 13 is a graph showing astigmatism of the lens optical system 800 according to the fourth embodiment shown in FIG. 12, and (c) in FIG. 13 is a graph showing a distortion aberration of the lens optical system 800 according to the fourth embodiment shown in FIG. 12. (a) in FIG. 13 is a graph showing the change in longitudinal spherical aberration according to the wavelength of light, where a horizontal axis may represent a degree of longitudinal spherical aberration, and a vertical axis may represent a normalized value of a distance from the center of the optical axis. For example, the longitudinal spherical aberration may be expressed for light with wavelengths of 656.3000 nm, 587.6000 nm, 546.1000 nm, 486.1000 nm, and 435.8000 nm.

(b) in FIG. 13 is a graph showing astigmatism for light with a wavelength of 546.1000 nm, and may represent astigmatic field curves. In (b) in FIG. 13, a dotted line T may represent astigmatism in a tangential direction (e.g., tangential field curvature), and a solid line S may represent astigmatism in a sagittal direction (e.g., sagittal field curvature).

(c) in FIG. 13 is a graph showing the distortion rate for light with a wavelength of 546.1000 nm. Images captured through the lens optical system 800 may be somewhat distorted at points off the optical axis OA, and may provide good optical characteristics with a distortion rate of less than 3%.

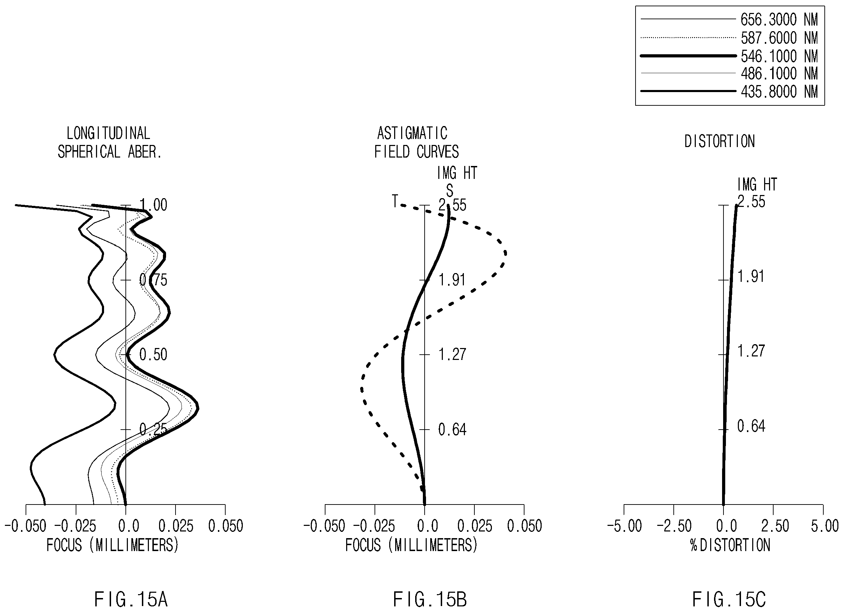

FIG. 14 is a view showing a configuration of a lens optical system according to a fifth embodiment. FIG. 15 is a view showing spherical aberration, astigmatism, and distortion aberration of the lens optical system according to the fifth embodiment in FIG. 14.

Referring to FIG. 14, a camera module (e.g., the camera module 400 in FIGS. 4a and 4b) may include a lens optical system 900 according to the fifth embodiment.

In the fifth embodiment, the lens optical system 900 may include a plurality of lenses 901 (e.g., the lens unit 421 in FIG. 4a) and a reflective member 950 (e.g., the reflective member 430 in FIG. 4a), an optical filter 960 (e.g., the optical filter 443 in FIG. 4a), and an image sensor 970 (e.g., the image sensor 441 in FIG. 4a). The components included in the lens optical system 900 according to the fifth embodiment may be the same as or similar to the components included in the lens optical system (e.g., the lens optical system 500 in FIG. 6) according to the first embodiment, and thus redundant descriptions thereof will be omitted.

In the fifth embodiment, the plurality of lenses 901 may include a first lens 910, a second lens 920, a third lens 930, and a fourth lens 940 that are sequentially arranged toward the reflective member 950 from an object OBJ. The plurality of lenses 901 may include lens surfaces S1, S3, S5, and S7 facing the object OBJ and lens surfaces S2, S4, S6, and S8 facing the reflective member 950, respectively.

In the fifth embodiment, an optical path OP, which is a path along which external light incident on the plurality of lenses 901 along an optical axis OA travels, may be defined in the lens optical system 900. The reflective member 950 may be configured to change the path of light passing through the plurality of lenses 901. The reflective member 950 may be disposed between the plurality of lenses 901 and the image sensor 970 (or optical filter 960) on the optical path OP.

In the fifth embodiment, the first lens 910 and the fourth lens 940 may have positive refractive power. The second lens 920 and the third lens 930 may have negative refractive power. The first lens 910 may have a surface S1 facing the object OBJ formed in a convex shape. The fourth lens 940 may have a lens surface S8 facing the reflective member 950 formed in a concave shape.

In the fifth embodiment, the plurality of lenses 901 may include at least two aspherical lenses. For example, the first lens 910, the second lens 920, the third lens 930, and the fourth lens 940 may all be aspherical lenses. In the first lens 910, the second lens 920, the third lens 930, and the fourth lens 940, the lens surfaces S1, S3, S5, and S7 on the object side and the lens surfaces S2, S4, S6, and S8 on the reflective member side may be all formed to be aspherical.

Various lens data of the lens optical system 900 according to the fifth embodiment may be expressed as shown in Table 11 below.

[Table 11]

| Surface | R (mm) | Dn (mm) | Nd | Vd |
|---|---|---|---|---|
| OBJ | infinity | infinity | | |
| SI(stp)* | 3.21 | 0.953 | 1.5441 | 56.14 |
| S2* | 21.432 | 0.05 | | |
| S3* | 3.779 | 0.508 | 1.63915 | 23.52 |
| S4* | 3.077 | 0.464 | | |
| S5* | -45.087 | 0.22 | 1.63915 | 23.52 |
| S6* | 2.795 | 0.483 | | |
| S7* | 2.337 | 0.418 | 1.61465 | 25.93 |
| S8* | 5.571 | 0.374 | | |
| S9 | infinity | 1.63 | 1.834 | 37.34 |
| S10 | infinity | 1.63 | 1.834 | 37.34 |
| S11 | infinity | 4.131 | | |
| S12 | infinity | 0.21 | 1.5168 | 64.17 |
| S13 | infinity | 3.024 | | |
| IMG | infinity | -0.01 | | |

In Table 11, S1 to S13 may refer to surfaces (or optical surfaces) of the plurality of lenses 901, the reflective member 950, and the optical filter 960, and IMG may refer to the image plane of the image sensor 970. For example, S1 to S8 may indicate the surfaces of the first lens 910, the second lens 920, the third lens 930, and the fourth lens 940. S9 to S11 may indicate the surfaces of the reflective member 950. S12 and S13 may indicate the surfaces of the optical filter 960. In Table 11, the "*" mark indicates that the optical surface is formed as an aspherical surface. In Table 11, the "stp" mark indicates that an aperture is disposed on a corresponding lens surface. For example, according to the lens optical system 900 of the fifth embodiment, the aperture may be disposed on the lens surface S1 of the first lens 910 facing the object OBJ.

In Table 11 above, R may refer to the radius of curvature of each of the optical surfaces, Dn may refer to the thickness of the lens or a gap between optical surfaces, Nd may refer to the refractive index, and Vd may refer to the Abbe number.

Aspheric coefficients of the plurality of lenses 901 according to the fifth embodiment may be expressed as shown in Table 12 and Table 13 below.

[Table 12]

| Surface | K | A | B | C | D |
|---|---|---|---|---|---|
| S1 | -0.10248 | 2.00E-04 | -5.76E-03 | 1.02E-02 | -7.99E-03 |
| S2 | 68.90054 | -1.06E-03 | 1.50E-02 | -1.71E-02 | 1.17E-02 |
| S3 | 0.14342 | 5.98E-03 | 1.91E-02 | -3.86E-02 | 3.12E-02 |
| S4 | 0.61528 | 1.74E-02 | 2.37E-04 | -2.94E-02 | 2.95E-02 |
| S5 | -99 | -2.39E-02 | 7.84E-02 | -7.25E-02 | 4.12E-02 |
| S6 | 0.13656 | -8.93E-02 | 9.34E-02 | -2.48E-02 | -5.06E-02 |
| S7 | -1.61832 | -3.81E-02 | 1.45E-02 | -4.52E-02 | 1.09E-01 |
| S8 | -21.6619 | 1.28E-02 | -2.84E-02 | 4.49E-02 | -5.80E-02 |

[Table 13]

| Surface | E | F | G | H | J |
|---|---|---|---|---|---|
| S1 | 3.59E-03 | -0.00098 | 1.59E-04 | -1.4E-05 | 5.23E-07 |
| S2 | -5.36E-03 | 0.001639 | -0.00032 | 3.55E-05 | -1.71E-06 |
| S3 | -1.39E-02 | 0.003576 | -0.0005 | 3.1E-05 | -2.9E-07 |
| S4 | -1.12E-02 | 0.000148 | 1.18E-03 | -0.00033 | 2.94E-05 |
| S5 | -1.41E-02 | 0.002653 | -0.00022 | 0 | 0 |
| S6 | 7.23E-02 | -0.04571 | 0.016085 | -0.00306 | 0.000247 |
| S7 | -1.33E-01 | 0.091325 | -0.03616 | 0.007699 | -0.00068 |
| S8 | 5.39E-02 | -0.03424 | 0.013729 | -0.00311 | 0.000301 |

Referring to FIG. 15, (a) in FIG. 15 is a graph showing the spherical aberration of the lens optical system 900 according to the fifth embodiment shown in FIG. 14, (b) in FIG. 15 is a graph showing astigmatism of the lens optical system 900 according to the fifth embodiment shown in FIG. 14, and (c) in FIG. 15 is a graph showing a distortion aberration of the lens optical system 900 according to the fifth embodiment shown in FIG. 14. (a) in FIG. 15 is a graph showing the change in longitudinal spherical aberration according to the wavelength of light, where a horizontal axis may represent a degree of longitudinal spherical aberration, and a vertical axis may represent a normalized value of a distance from the center of the optical axis. For example, the longitudinal spherical aberration may be expressed for light with wavelengths of 656.3000 nm, 587.6000 nm, 546.1000 nm, 486.1000 nm, and 435.8000 nm.

(b) in FIG. 15 is a graph showing astigmatism for light with a wavelength of 546.1000 nm, and may represent astigmatic field curves. In (b) in FIG. 15, a dotted line T may represent astigmatism in a tangential direction (e.g., tangential field curvature), and a solid line S may represent astigmatism in a sagittal direction (e.g., sagittal field curvature).

(c) in FIG. 15 is a graph showing the distortion rate for light with a wavelength of 546.1000 nm. Images captured through the lens optical system 900 may be somewhat distorted at points off the optical axis OA, and may provide good optical characteristics with a distortion rate of less than 3%.

Referring to FIGS. 6, 8, 10, 12, and 14, a camera module (e.g., the camera modules 400 in FIGS. 4a and 5) according to one embodiment may lens optical systems of various embodiments satisfying the optical conditions described above (e.g., Equation 1 to Equation 4).

For example, the lens optical system 500 according to the first embodiment in FIG. 6, the lens optical system 600 according to the second embodiment in FIG. 8, the lens optical system 700 according to the third embodiment in FIG. 10, the lens optical system 800 according to the fourth embodiment in FIG. 12 and the lens optical system 900 according to the fifth embodiment in FIG. 14 may satisfy at least one of Equations 1 to 4 described above. Optical condition data of each embodiment calculated based on Equation 1 to Equation 4 may be shown as in Table 14 below.

[Table 14]

|  | Equation 1 | Equation 2 | Equation 3 | Equation 4 |
|---|---|---|---|---|
| First embodiment | 0.316056 | 1.364 | 0.462214 | 0.368613 |
| Second embodiment | 0.324238 | 1.178491 | 0.36608 | 0.456944 |
| Third embodiment | 0.317075 | 1.348611 | 0.458213 | 0.361134 |
| Fourth embodiment | 0.298708 | 1.4145 | 0.245971 | 0.376777 |
| Fifth embodiment | 0.246361 | 2.119597 | 0.391715 | 0.502891 |

The camera module 400 according to one embodiment disclosed herein may include the camera housing 410, the lens assembly 420 at least partially disposed inside the camera housing and including a plurality of lenses (e.g., the lens unit 421), the image sensor 441 disposed on one side of the camera housing so that the image plane 441a is parallel to the optical axis OA of the plurality of lenses, and the reflective member 430 aligned with the lens assembly in a direction of the optical axis and optically disposed between the lens assembly and the image sensor, the plurality of lenses may include the first lens 422, the second lens 423, the third lens 424, and the fourth lens 425 that are sequentially arranged toward the reflective member from the object OBJ, the first lens may have a positive refractive power and have lens surface facing the object formed in a convex shape, the fourth lens may have a lens surface facing the reflective member formed in a concave shape, a ratio of the optical distance D1 between the first lens and the reflective member to the optical distance DT between the first lens and the image sensor may be less than 1, a ratio of the optical distance D2 between the reflective member and the image sensor to the optical distance D1 between the first lens and the reflective member may be 1 or more, and the optical distance may be defined as a length of the optical path OP that is a path along which light incident on the plurality of lenses along the optical axis passes through the reflective member and travels to the image sensor.

In various embodiments, the first lens may include the first lens surface 422a facing the object and the second lens surface 422b opposite to the first lens surface, and the reflective member may include the incidence surface 431 facing the plurality of lenses and the exit surface 433 perpendicular to the incidence surface and facing the image sensor.

In various embodiments, the camera module may satisfy the following Equation 1.

$$[\text{Equation 1}] \quad 0.2 \leq D1/DT \leq 0.6$$

(in Equation 1, "D1" represents the optical distance between the first lens surface of the first lens and the incidence surface of the reflective member, and "DT" represents the optical distance between the first lens surface of the first lens and the image plane of the image sensor)

In various embodiments, the camera module may satisfy the following Equation 2.

$$[\text{Equation 2}] \quad 1 \leq D2/D1 \leq 2.5$$

(in Equation 2, "D1" represents the optical distance between the first lens surface of the first lens and the incidence surface of the reflective member, and "D2" represents the optical distance between the exit surface of the reflective member and the image plane of the image sensor)

In various embodiments, the optical distance between the first lens and the image sensor may be a length from a center point of the first lens surface to the image plane on the optical path, the optical distance between the first lens and the reflective member may be a length from the center point of the first lens surface to the incidence surface on the optical path, and the optical distance between the reflective member and the image sensor may be a length from the exit surface to the image plane on the optical path.

In various embodiments, the reflective member may be disposed between the plurality of lenses and the image sensor on the optical path, and the incidence surface of the reflective member may face one surface 425b of the fourth lens.

In various embodiments, the reflective member may further include a reflective surface 435 that obliquely connects the incidence surface and the exit surface, and external light incident on the incidence surface that has passed through the plurality of lenses may be reflected by the reflective surface in a direction perpendicular to an incident direction and exit toward the image sensor through the exit surface.

In various embodiments, the lens assembly may be configured so that at least two of the first lens, the second lens, the third lens, and the fourth lens are formed as aspherical lenses.

In various embodiments, the second lens may include the third lens surface 423a facing the object and the fourth lens surface 423b opposite to the third lens surface, the third lens may include the fifth lens surface 424a facing the object and the sixth lens surface 424b opposite to the fifth lens surface, the fourth lens may include the seventh lens surface 425a facing the object and the eighth lens surface 425b opposite to the seventh lens surface, and in the lens assembly, the first to eighth lens surfaces may be formed as aspherical surfaces.

In various embodiments, the fourth lens may include a seventh lens surface facing the object and an eighth lens surface facing the reflective member, and the following Equation 3 may be satisfied.

$$[Equation\ 3]\quad 0.15 \leq D3/T \leq 0.65$$

(in Equation 3, "D3" represents the optical distance between the eighth lens surface of the fourth lens and the incidence surface of the reflective member, and "T" represents a thickness of the first lens on the optical axis)

In various embodiments, the optical distance between the eighth lens surface of the fourth lens and the incidence surface of the reflective member may be a length from a center point of the eighth lens surface to the incidence surface on the optical path, and the thickness of the first lens on the optical axis may be a length from a center point of the first lens surface to a center point of the second lens surface.

In various embodiments, the plurality of lenses and the reflective member may form a lens optical system of the camera module, and the lens optical system may satisfy the following Equation 4.

$$[Equation\ 4]\quad 0.3 \leq f1/f \leq 0.6$$

(in Equation 4, "f1" represents a focal length of the first lens, and "f" represents a composite focal length of the lens optical system)

In various embodiments, an Abbe number of the first lens may be greater than 30, and an Abbe number of the second lens may be 30 or less.

The electronic device 300 according to one embodiment disclosed herein may include the housing 310, the display 330 disposed inside the housing to be visually exposed through a front surface of the housing, and the camera module 305, 312, or 400 disposed inside the housing and configured to receive external light through a portion of a region of the housing, the camera module may include the camera housing 410, the lens assembly 420 at least partially disposed inside the camera housing and including a plurality of lenses (e.g., the lens unit 421), then image sensor 441 disposed on one side of the camera housing so that the image plane 441a is parallel to an optical axis of the plurality of lenses, and the reflective member 430 aligned with the lens assembly in a direction of the optical axis and optically disposed between the lens assembly and the image sensor, the plurality of lenses may include the first lens 422, the second lens 423, the third lens 424, and the fourth lens 425 that are sequentially arranged toward the reflective member from the object OBJ, the reflective member may include the incidence surface 431 facing the fourth lens and the exit surface 433 perpendicular to the incidence surface and facing the image sensor, the first lens may have a positive refractive power and have the lens surface 422a on the object side facing the object formed in a convex shape, the fourth lens may have a lens surface 425b on the reflective member side facing the reflective member formed in a concave shape, a ratio of an optical distance between the first lens and the reflective member to an optical distance between the first lens and the image sensor may be less than 1, a ratio of an optical distance between the reflective member and the image sensor to the optical distance between the first lens and the reflective member may be 1 or more, and the optical distance may be defined as a length of an optical path that is a path along which external light incident on the plurality of lenses along the optical axis passes through the reflective member and travels to the image sensor.

In various embodiments, the camera module may satisfy the following Equation 1.

$$[Equation\ 1]\quad 0.2 \leq D1/DT \leq 0.6$$

(in Equation 1, "D1" represents the optical distance between a lens surface of the first lens on an object side and the incidence surface of the reflective member, and "DT" represents the optical distance between the lens surface on an object side of the first lens and the image plane of the image sensor)

In various embodiments, the camera module may satisfy the following Equation 2.

$$[Equation\ 2]\quad 1 \leq D2/D1 \leq 2.5$$

(in Equation 2, "D1" represents the optical distance between the lens surface on an object side of the first lens and the incidence surface of the reflective member, and "D2" represents the optical distance between the exit surface of the reflective member and the image plane of the image sensor)

In various embodiments, the camera module may satisfy the following Equation 3.

$$[\text{Equation 3}] \quad 0.15 \leq D3/T \leq 0.65$$

(in Equation 3, "D3" represents the optical distance between a lens surface of the fourth lens on the object side and the incidence surface of the reflective member, and "T" represents a thickness of the first lens on the optical axis)

In various embodiments, the plurality of lenses and the reflective member may form a lens optical system of the camera module, and the lens optical system may satisfy the following Equation 4.

$$[\text{Equation 4}] \quad 0.3 \leq f1/f \leq 0.6$$

(in Equation 4, "f1" represents a focal length of the first lens, and "f" represents a composite focal length of the lens optical system)

In various embodiments, the lens assembly may be configured so that at least two of the first lens, the second lens, the third lens, and the fourth lens are formed as aspherical lenses.

In various embodiments, the reflective member may further include a reflective surface 435 that obliquely connects the incidence surface and the exit surface, and the camera module may be configured to allow external light that has passed through the plurality of lenses and has been incident on the incidence surface to be reflected by the reflective surface in a direction perpendicular to an incident direction and exit toward the image sensor through the exit surface.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. A camera module comprising:

   a camera housing;
   a lens assembly at least partially disposed inside the camera housing and including a plurality of lenses;
   an image sensor disposed on one side of the camera housing so that an image plane is parallel to an optical axis of the plurality of lenses; and
   a reflective member aligned with the lens assembly in a direction of the optical axis and optically disposed between the lens assembly and the image sensor,
   wherein the plurality of lenses include a first lens, a second lens, a third lens, and a fourth lens that are sequentially arranged toward the reflective member from an object,
   the first lens has a positive refractive power and has a lens surface facing the object formed in a convex shape,
   the fourth lens has a lens surface facing the reflective member formed in a concave shape,
   a ratio of an optical distance between the first lens and the reflective member to an optical distance between the first lens and the image sensor is less than 1,
   a ratio of an optical distance between the reflective member and the image sensor to the optical distance between the first lens and the reflective member is 1 or more, and
   the optical distance is defined as a length of an optical path that is a path along which light incident on the plurality of lenses along the optical axis passes through the reflective member and travels to the image sensor.

2. The camera module of claim 1, wherein the first lens includes a first lens surface facing the object and a second lens surface opposite to the first lens surface, and
   the reflective member includes an incidence surface facing the plurality of lenses and an exit surface perpendicular to the incidence surface and facing the image sensor.

3. The camera module of claim 2, wherein the following Equation 1 is satisfied.

$$[Equation\ 1]$$

$$0.2 \leq D1/DT \leq 0.6$$

   (in Equation 1, "D1" represents the optical distance between the first lens surface of the first lens and the incidence surface of the reflective member, and "DT" represents the optical distance between the first lens surface of the first lens and the image plane of the image sensor)

4. The camera module of claim 2, wherein the following Equation 2 is satisfied.

[Equation 2]

$$1 \leq D2/D1 \leq 2.5$$

(in Equation 2, "D1" represents the optical distance between the first lens surface of the first lens and the incidence surface of the reflective member, and "D2" represents the optical distance between the exit surface of the reflective member and the image plane of the image sensor)

5. The camera module of claim 2, wherein the optical distance between the first lens and the image sensor is a length from a center point of the first lens surface to the image plane on the optical path,

the optical distance between the first lens and the reflective member is a length from the center point of the first lens surface to the incidence surface on the optical path, and
the optical distance between the reflective member and the image sensor is a length from the exit surface to the image plane on the optical path.

6. The camera module of claim 2, wherein the reflective member is disposed between the plurality of lenses and the image sensor on the optical path, and
the incidence surface of the reflective member faces one surface of the fourth lens.

7. The camera module of claim 2, wherein the reflective member further includes a reflective surface that obliquely connects the incidence surface and the exit surface, and
external light incident on the incidence surface that has passed through the plurality of lenses is reflected by the reflective surface in a direction perpendicular to an incident direction and exits toward the image sensor through the exit surface.

8. The camera module of claim 1, wherein the lens assembly is configured so that at least two of the first lens, the second lens, the third lens, and the fourth lens are formed as aspherical lenses.

9. The camera module of claim 2, wherein the second lens includes a third lens surface facing the object and a fourth lens surface opposite to the third lens surface,

the third lens includes a fifth lens surface facing the object and a sixth lens surface opposite to the fifth lens surface,
the fourth lens includes a seventh lens surface facing the object and an eighth lens surface opposite to the seventh lens surface, and
in the lens assembly, the first to eighth lens surfaces are formed as aspherical surfaces.

10. The camera module of claim 2, wherein the fourth lens includes a seventh lens surface facing the object and an eighth lens surface facing the reflective member, and

the following Equation 3 is satisfied.

[Equation 3]

$$0.15 \leq D3/T \leq 0.65$$

(in Equation 3, "D3" represents the optical distance between the eighth lens surface of the fourth lens and the incidence surface of the reflective member, and "T" represents a thickness of the first lens on the optical axis)

11. The camera module of claim 10, wherein the optical distance between the eighth lens surface of the fourth lens and the incidence surface of the reflective member is a length from a center point of the eighth lens surface to the incidence surface on the optical path, and
a thickness of the first lens on the optical axis is a length from a center point of the first lens surface to a center point of the second lens surface.

12. The camera module of claim 1, wherein the plurality of lenses and the reflective member form a lens optical system of the camera module, and

the lens optical system satisfies the following Equation 4.

[Equation 4]

$$0.3 \leq f1/f \leq 0.6$$

(in Equation 4, "f1" represents a focal length of the first lens, and "f" represents a composite focal length of the lens optical system)

13. The camera module of claim 1, wherein an Abbe number of the first lens is greater than 30, and an Abbe number of the second lens is 30 or less.

14. An electronic device comprising:

a housing;
a display disposed inside the housing to be visually exposed through a front surface of the housing; and
a camera module disposed inside the housing and configured to receive external light through a portion of a region of the housing,
wherein the camera module includes:

a camera housing;
a lens assembly at least partially disposed inside the camera housing and including a plurality of lenses;
an image sensor disposed on one side of the camera housing so that an image plane is parallel to an optical axis of the plurality of lenses; and
a reflective member aligned with the lens assembly in a direction of the optical axis and optically disposed between the lens assembly and the image sensor,

the plurality of lenses include a first lens, a second lens, a third lens, and a fourth lens that are sequentially arranged toward the reflective member from an object,
the reflective member includes an incidence surface facing the fourth lens and an exit surface perpendicular to the incidence surface and facing the image sensor,
the first lens has a positive refractive power and has a lens surface on an object side facing the object formed in a convex shape,
the fourth lens has a lens surface on a reflective member side facing the reflective member formed in a concave shape,
a ratio of an optical distance between the first lens and the reflective member to an optical distance between the first lens and the image sensor is less than 1,
a ratio of an optical distance between the reflective member and the image sensor to the optical distance between the first lens and the reflective member is 1 or more, and
the optical distance is defined as a length of an optical path that is a path along which external light incident on the plurality of lenses along the optical axis passes through the reflective member and travels to the image sensor.

15. The electronic device of claim 14, wherein the camera module satisfies the following Equation 1 and Equation 2.

[Equation 1]

$$0.2 \leq D1/DT \leq 0.6$$

[Equation 2]

$$1 \leq D2/D1 \leq 2.5$$

(in Equation 1 and Equation 2, "D1" represents the optical distance between the lens surface on an object side of the first lens and the incidence surface of the reflective member, "DT" represents the optical distance between the lens surface on an object side of the first lens and the image plane of the image sensor, and "D2" represents the optical distance between the exit surface of the reflective member and the image surface of the image sensor)

100

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

POWER MANAGEMENT MODULE 188

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

SECOND NETWORK 199

ELECTRONIC DEVICE 104

FIRST NETWORK 198

ELECTRONIC DEVICE 102

SERVER 108

FIG.1

200

CAMERA MODULE 180

LENS
ASSEMBLY
210

FLASH 220

IMAGE SENSOR 230

IMAGE STABILIZER 240

MEMORY 250

IMAGE SIGNAL
PROCESSOR
260

FIG.2

300

301    305

310A

318

317

302

310
310C

310D

303  308  307

Z
Y
X

310 { 310A
310B
310C { 310D
310E

FIG.3A

FIG.3B

FIG.3C

FIG.4A

FIG.4B

FIG.5

FIG.6

FIG.7A

FIG.7B

FIG.7C

FIG.8

EP 4 408 005 A1

LONGITUDINAL
SPHERICAL ABER.

656.3000 NM
587.6000 NM
546.1000 NM
486.1000 NM
435.8000 NM

1.00

0.75

0.50

0.25

-0.050 -0.025  0.0  0.025  0.050
FOCUS (MILLIMETERS)

FIG.9A

ASTIGMATIC
FIELD CURVES

IMG HT
2.48         S        T

1.86

1.24

0.62

-0.050 -0.025  0.0  0.025  0.050
FOCUS (MILLIMETERS)

FIG.9B

DISTORTION

IMG HT
2.48

1.86

1.24

0.62

-5.0  -2.5  0.0  2.5  5.0
%DISTORTION

FIG.9C

43

FIG.10

| | |
|---|---|
| —————— | 656.3000 NM |
| ·············· | 587.6000 NM |
| —————— | 546.1000 NM |
| —————— | 486.1000 NM |
| —————— | 435.8000 NM |

LONGITUDINAL
SPHERICAL ABER.

1.00

0.75

0.50

0.25

-0.050 -0.025 0.0 0.025 0.050
FOCUS (MILLIMETERS)

FIG.11A

ASTIGMATIC
FIELD CURVES

IMG HT
S  T 2.53

1.90

1.26

0.63

-0.050 -0.025 0.0 0.025 0.050
FOCUS (MILLIMETERS)

FIG.11B

DISTORTION

IMG HT
2.53

1.90

1.26

0.63

-5.00 -2.50 0.0 2.50 5.00
%DISTORTION

FIG.11C

FIG.12

656.3000 NM
587.6000 NM
546.1000 NM
486.1000 NM
435.8000 NM

LONGITUDINAL
SPHERICAL ABER.

ASTIGMATIC
FIELD CURVES

DISTORTION

IMG HT

S                    T
2.53

1.90

1.26

0.63

1.00

0.75

0.50

.25

-0.050 -0.025  0.0  0.025  0.050
FOCUS (MILLIMETERS)

-0.050 -0.025  0.0  0.025  0.050
FOCUS (MILLIMETERS)

IMG HT
2.53

1.90

1.26

0.63

-5.00  -2.50   0.0   2.50   5.00
%DISTORTION

FIG.13A

FIG.13B

FIG.13C

FIG.14

FIG.15A  FIG.15B  FIG.15C

## INTERNATIONAL SEARCH REPORT

International application No.

**PCT/KR2022/016318**

| A. | CLASSIFICATION OF SUBJECT MATTER |
|---|---|

**H04N 23/60**(2023.01)i; **H04N 23/00**(2023.01)i

According to International Patent Classification (IPC) or to both national classification and IPC

| B. | FIELDS SEARCHED |
|---|---|

Minimum documentation searched (classification system followed by classification symbols)

H04N 23/60(2023.01); G02B 13/00(2006.01); G02B 13/18(2006.01); G02B 15/20(2006.01); G02B 7/02(2006.01); G02B 9/60(2006.01); G02B 9/64(2006.01); G03B 13/36(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 모듈(module), 렌즈(lens), 반사 부재(reflective unit), 광학 거리 (optical distance), 초점 거리(focal length), 아베(abbe), 하우징(housing), 디스플레이(display)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2021-0027185 A (SAMSUNG ELECTRO-MECHANICS CO., LTD.) 10 March 2021 (2021-03-10)<br>See paragraphs [0150]-[0153] and [0182]; claims 1 and 9; and figures 15 and 18. | 1-15 |
| A | KR 10-2020-0118709 A (SAMSUNG ELECTRONICS CO., LTD.) 16 October 2020 (2020-10-16)<br>See paragraphs [0025], [0045]-[0046] and [0128]; and figure 3. | 1-15 |
| A | US 2021-0318522 A1 (ZHEJIANG SUNNY OPTICS CO., LTD.) 14 October 2021 (2021-10-14)<br>See paragraphs [0067]-[0073]; and figures 1-2. | 1-15 |
| A | KR 10-2017-0043943 A (SAMSUNG ELECTRO-MECHANICS CO., LTD.) 24 April 2017 (2017-04-24)<br>See paragraphs [0036]-[0059] and [0066]-[0085]; and figures 1 and 8. | 1-15 |
| A | JP 2013-092554 A (CANON INC.) 16 May 2013 (2013-05-16)<br>See paragraphs [0021]-[0051] and [0077]; and figures 11-12. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/016318**

| Patent document cited in search report | | | Publication date (day/month/year) | Patent family member(s) | | | Publication date (day/month/year) |
|---|---|---|---|---|---|---|---|
| KR | 10-2021-0027185 | A | 10 March 2021 | CN | 112444947 | A | 05 March 2021 |
| | | | | CN | 112444947 | B | 03 January 2023 |
| | | | | CN | 214586194 | U | 02 November 2021 |
| | | | | KR | 10-2022-0165231 | A | 14 December 2022 |
| | | | | US | 2021-0063686 | A1 | 04 March 2021 |
| KR | 10-2020-0118709 | A | 16 October 2020 | CN | 113711124 | A | 26 November 2021 |
| | | | | EP | 3931635 | A1 | 05 January 2022 |
| | | | | EP | 3931635 | A4 | 27 April 2022 |
| | | | | US | 2020-0319439 | A1 | 08 October 2020 |
| | | | | WO | 2020-209492 | A1 | 15 October 2020 |
| US | 2021-0318522 | A1 | 14 October 2021 | CN | 111505799 | A | 07 August 2020 |
| KR | 10-2017-0043943 | A | 24 April 2017 | CN | 106597650 | A | 26 April 2017 |
| | | | | CN | 106597650 | B | 16 October 2020 |
| | | | | CN | 111948790 | A | 17 November 2020 |
| | | | | CN | 114911038 | A | 16 August 2022 |
| | | | | KR | 10-1740815 | B1 | 26 May 2017 |
| | | | | US | 10386615 | B2 | 20 August 2019 |
| | | | | US | 11079572 | B2 | 03 August 2021 |
| | | | | US | 2017-0108669 | A1 | 20 April 2017 |
| | | | | US | 2019-0328441 | A1 | 31 October 2019 |
| | | | | US | 2021-0318524 | A1 | 14 October 2021 |
| JP | 2013-092554 | A | 16 May 2013 | JP | 2014-092554 | A5 | 04 December 2014 |
| | | | | JP | 5787716 | B2 | 30 September 2015 |
| | | | | US | 2013-0100325 | A1 | 25 April 2013 |
| | | | | US | 8687283 | B2 | 01 April 2014 |

Form PCT/ISA/210 (patent family annex) (July 2022)